(19)

Europäisches
Patentamt
European
Patent Office
Office européen
des brevets

(11) **EP 4 571 678 A1**

(12) **EUROPEAN PATENT APPLICATION**

(43) Date of publication:
**18.06.2025 Bulletin 2025/25**

(21) Application number: **24215634.7**

(22) Date of filing: **27.11.2024**

(51) International Patent Classification (IPC):
***G06V 20/56*** (2022.01)    ***G06V 20/58*** (2022.01)

(52) Cooperative Patent Classification (CPC):
**G06V 20/58; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.12.2023 US 202363608999 P**

(71) Applicant: **GEOTAB Inc.**
**Oakville, ON L6H 7V2 (CA)**

(72) Inventor: **Ivascu, Cristian Florin**
**Hamilton (CA)**

(74) Representative: **Fleuchaus & Gallo Partnerschaft mbB**
**Steinerstraße 15/A**
**81369 München (DE)**

(54) **SYSTEMS AND METHODS FOR MANAGING SEGMENTED IMAGE DATA FOR VEHICLES**

(57)    Systems, devices, and methods for segmenting image data and utilizing image data having different pixel densities are described. One or more image capture devices can capture vehicle-related image data, which can be segmented such that regions of the image data which are directed to important content and/or far away content can have higher pixel density than regions of the image data directed to less important content and/or content close the one or more image capture devices. Image analysis is performed on the segmented image data. Output image data is generated of a lower pixel density to reduce storage and/or transmission requirements.

FIGURE 1A

EP 4 571 678 A1

**Description**

PRIOR APPLICATION DATA

This application claims priority to US Provisional Patent Application No. 63/608,999, titled "Systems and Methods for Managing Segmented Image Data for Vehicles", filed on December 12, 2023.

TECHNICAL FIELD

The present disclosure generally relates to systems and methods for managing image data, and in particular relates to managing segmented image data pertinent to vehicles.

BACKGROUND

Vehicle-related image data provides a number of benefits. As non-limiting examples, image data captured from a perspective of a vehicle can be used to identify or characterize infrastructure (for example signage), to analyze driving behaviors, or to understand events such as collisions or near-misses. However, image data file size is a significant issue, with image data requiring significant resources to process, store, or transmit. The present disclosure provides means for segmenting and/or managing segmented image data which optimizes image data size.

SUMMARY

According to a broad aspect, the present disclosure describes a method comprising: accessing, by a vehicle device positioned at a vehicle, input image data representing a perspective from the vehicle, the input image data including a first region and a second region, the first and the second region each having an input pixel density; generating first image data, the first image data at least partially representing the first region and having a first pixel density; generating second image data, the second image data at least partially representing the second region and having a second pixel density less than the first pixel density; generating analysis data by executing at least one image analysis model on the first image data and the second image data; generating output image data, the output image data representing the first region and the second region and having the second pixel density; outputting the analysis data; and outputting the output image data.
Outputting the output image data may comprise outputting the output image data to at least one non-transitory processor-readable storage medium at the vehicle device.
Outputting the output image data may comprise transmitting, by at least one communication interface of the vehicle device, the output image data to a device remote from the vehicle.
Outputting the analysis data may comprise transmitting, by at least one communication interface of the vehicle device, the analysis data to a device remote from the vehicle.
The input image data may further include a third region having the input pixel density; the method may further comprise: generating third image data, the third image data at least partially representing the third region and having a third pixel density less than the first pixel density and greater than the second pixel density; generating the analysis data may comprise generating the analysis data by executing the at least one image analysis model on the first image data, the second image data, and the third image data; and generating the output image data may comprise generating the output image data representing the first region, the second region, and the third region, at the second pixel density.
The first region may represent real-world content further from the vehicle than real-world content represented by the second region.
The first image data may represent an entirety of the first region; and the second image data may represent an entirety of the second region. The first image data may represent a first cropped portion of the first region; and the second image data may represent a second cropped portion of the second region.
Generating the analysis data by executing at least one image analysis model on the first image data and the second image data may comprise: executing a trained object detection model on the first image data and the second image data. Generating the analysis data by executing at least one image analysis model on the first image data and the second image data may comprise: executing a following distance detection model on the first image data and the second image data.
Accessing the input image data may comprise capturing the input image data by an image capture device positioned at the vehicle. Accessing the input image data may comprise receiving the input image data from an image capture device communicatively coupled to the vehicle device.
According to another broad aspect, the present disclosure describes a system comprising: a vehicle device positioned at a vehicle, the vehicle device including at least one processor and at least one non-transitory processor-readable storage medium communicatively coupled to the at least one processor, the at least one non-transitory processor-readable storage medium storing processor-executable instructions which, when executed by the at least one processor, cause the vehicle device to: access input image data representing a perspective from the vehicle, the input image data including a first region and a second region, the first and the second region each having an input pixel density; generate, by the at least one processor, first image data, the first image data at least partially representing the first region and having a first pixel density; generate, by the at least one processor, second image data, the second image data at least partially representing the second region and having a second pixel density less than the first pixel density; generate, by the at least one processor, analysis data by executing at least one image analysis model on the first image data and the second image data; generate, by the at least one processor, output image data, the output image data representing the first region and the second region and having the second pixel density; outputting the analysis data; and outputting the output image data.

The processor-executable instructions which cause the vehicle device to output the output image data may cause the at least one processor to output the output image data to the at least one non-transitory processor-readable storage medium at the vehicle device for storage.

The vehicle device may further include at least one communication interface; and the processor-executable instructions which cause the vehicle device to output the output image data may cause the at least one communication interface to transmit the output image data to a device remote from the vehicle.

The vehicle device may further include at least one communication interface; and the processor-executable instructions which cause the vehicle device to output the analysis data may cause the at least one communication interface to transmit the analysis data to a device remote from the vehicle.

The input image data may further include a third region having the input pixel density; the processor-executable instructions may further cause the at least one processor to: generate third image data, the third image data at least partially representing the third region and having a third pixel density less than the first pixel density and greater than the second pixel density; the processor-executable instructions which cause the at least one processor to generate the analysis data may cause the at least one processor to generate the analysis data by executing the at least one image analysis model on the first image data, the second image data, and the third image data; and the processor-executable instructions which cause the at least one processor to generate the output image data may cause the at least one processor to generate the output image data representing the first region, the second region, and the third region, at the second pixel density.

The first region may represent real-world content further from the vehicle than real-world content represented by the second region.

The first image data may represent an entirety of the first region; and the second image data may represent an entirety of the second region.

The first image data may represent a first cropped portion of the first region; and the second image data may represent a second cropped portion of the second region.

The processor-executable instructions which cause the at least one processor to generate the analysis data by executing at least one image analysis model on the first image data and the second image data may cause the at least one processor to: execute a trained object detection model on the first image data and the second image data.

The processor-executable instructions which cause the at least one processor to generate the analysis data by executing at least one image analysis model on the first image data and the second image data may cause the at least one processor to: execute a following distance detection model on the first image data and the second image data.

The vehicle device may further include at least one communication interface; and the processor-executable instructions which cause the system to access the input image data may cause the vehicle device to receive the input image data from an image capture device communicatively coupled to the vehicle device via the at least one communication interface. The system may further comprise the image capture device.

According to another broad aspect, the present disclosure describes a method comprising: accessing, by a vehicle device positioned at a vehicle, first image data, the first image data representing a first region from a perspective of the vehicle and having a first pixel density; accessing, by the vehicle device, second image data, the second image data representing a second region from the perspective of the vehicle and having a second pixel density less than the first pixel density; generating analysis data by executing at least one image analysis model on the first image data and the second image data; generating output image data, the output image data representing the first region and the second region and having the second pixel density; outputting the analysis data; and outputting the output image data.

Outputting the output image data may comprise outputting the output image data to at least one non-transitory processor-readable storage medium at the vehicle device.

Outputting the output image data may comprise transmitting, by at least one communication interface of the vehicle device, the output image data to a device remote from the vehicle.

Outputting the analysis data may comprise transmitting, by at least one communication interface of the vehicle device, the analysis data to a device remote from the vehicle.

The method may further comprise accessing, by the vehicle device, third image data, the third image data representing a third region from the perspective of the vehicle and having a third pixel density less than the first pixel density and greater than the second pixel density; generating the analysis data may comprise generating the analysis data by executing the at least one image analysis model on the first image data, the second image data, and the third image data; and generating the output image data may comprise generating the output image data representing the first region, the second region, and the third region, at the second pixel density.

The first region may represent real-world content further from the vehicle than real-world content represented by the second region.

Generating the analysis data by executing at least one image analysis model on the first image data and the second image data may comprise: executing a trained object detection model on the first image data and the second image data. Generating the analysis data by executing at least one image analysis model on the first image data and the second image data may comprises: executing a following distance detection model on the first image data and the second image data.

Accessing the first image data may comprise capturing the first image data by first image capture hardware positioned at the vehicle; and accessing the second image data may comprise capturing the second image data by second image capture hardware positioned at the vehicle.

Accessing the first image data may comprise receiving the first image data from first image capture hardware positioned at the vehicle and communicatively coupled to the vehicle device; and accessing the second image data may comprise receiving the second image data from second image capture hardware positioned at the vehicle and communicatively coupled to the vehicle device.

According to another broad aspect, the present disclosure describes a system comprising: a vehicle device positioned at a vehicle, the vehicle device including at least one processor and at least one non-transitory processor-readable storage medium communicatively coupled to the at least one processor, the at least one non-transitory processor-readable storage medium storing processor-executable instructions which, when executed by the at least one processor, cause the vehicle device to: access first image data, the first image data representing a first region from a perspective of the vehicle and having a first pixel density; access second image data, the second image data representing a second region from the perspective of the vehicle and having a second pixel density less than the first pixel density; generate, by the at least one processor, analysis data by executing at least one image analysis model on the first image data and the second image data; generate, by the at least one processor, output image data, the output image data representing the first region and the second region and having the second pixel density; output the analysis data; and output the output image data.

The processor-executable instructions which cause the vehicle device to output the output image data may cause the vehicle device to output the output image data to the at least one non-transitory processor-readable storage medium at the vehicle device for storage.

The vehicle device may further include at least one communication interface; and the processor-executable instructions which cause the vehicle device to output the output image data may cause the at least one communication interface to transmit the output image data to a device remote from the vehicle.

The vehicle device may further include at least one communication interface; and the processor-executable instructions which cause the vehicle device to output the analysis data may cause the at least one communication interface to transmit the analysis data to a device remote from the vehicle.

The processor-executable instructions may further cause the vehicle device to access third image data, the third image data representing a third region from the perspective of the vehicle and having a third pixel density less than the first pixel density and greater than the second pixel density; the processor-executable instructions which cause the at least one processor to generate the analysis data may cause the at least one processor to generate the analysis data by executing the at least one image analysis model on the first image data, the second image data, and the third image data; and the processor-executable instructions which cause the at least one processor to generate the output image data may cause the at least one processor to generate the output image data representing the first region, the second region, and the third region, at the second pixel density.

The first region may represent real-world content further from the vehicle than real-world content represented by the second region.

The processor-executable instructions which cause the at least one processor to generate the analysis data by executing at least one image analysis model on the first image data and the second image data may cause the at least one processor to: execute a trained object detection model on the first image data and the second image data. The processor-executable instructions which cause the at least one processor to generate the analysis data by executing at least one image analysis model on the first image data and the second image data may cause the at least one processor to: execute a following distance detection model on the first image data and the second image data.

The vehicle device may further include at least one communication interface; the processor-executable instructions which cause the vehicle device to access the first image data may cause the vehicle device to receive the first image data from first image capture hardware positioned at the vehicle via the at least one communication interface; and the processor-executable instructions which cause the vehicle device to access the second image data may cause the vehicle device to receive the second image data from second image capture hardware positioned at the vehicle via the at least one communication interface. The system may further comprise the first image capture hardware and the second image capture hardware.

BRIEF DESCRIPTION OF THE DRAWINGS

Exemplary non-limiting embodiments are described with reference to the accompanying drawings in which:

Figure 1A illustrates a block diagram of an exemplary mobile image system.
Figure 1B illustrates a block diagram of another exemplary mobile image system.
Figures 2A, 2B, 2C, and 2D are simplified block diagrams of image capture devices according to at least four exemplary implementations.
Figure 3 is a schematic view of an operator device in accordance with at least one exemplary implementation.
Figure 4 is a flowchart diagram which illustrates a method for generating and utilizing segmented image data, in accordance with at least one exemplary implementation.
Figure 5A illustrates an exemplary image from the perspective of a vehicle, and Figure 5B illustrates the image of Figure 5A segmented into image data of differing pixel densities, in accordance with at least one exemplary implementation.
Figure 6A illustrates an exemplary image from the perspective of a vehicle, and Figure 6B illustrates the image of Figure 6A segmented into image data of differing pixel densities, in accordance with at least one other exemplary implementation.
Figure 7A illustrates an exemplary image from the perspective of a vehicle, and Figure 7B illustrates the image of Figure 7A segmented into image data of differing pixel densities, in accordance with at least one other exemplary implementation.
Figure 8A illustrates an exemplary image from the perspective of a vehicle, and Figure 8B illustrates the image of Figure 8A segmented into image data of differing pixel densities, in accordance with at least one other exemplary implementation.
Figure 9 illustrates the image data of Figure 8B with a stretched appearance, in accordance with at least one other exemplary implementation.
Figure 10 is a flowchart diagram which illustrates a method for utilizing image data having differing pixel densities, in accordance with at least one exemplary implementation.
Figure 11 is a flowchart diagram which illustrates a method for training a following distance determination model, in accordance with at least one exemplary implementation.
Figure 12 is a flowchart diagram which illustrates a method determining following distance, in accordance with at least one exemplary implementation.
Figure 13 illustrates image data showing positional measures for use with a following distance determination model, in accordance with at least one exemplary implementation.
Figure 14 is a flowchart diagram which illustrates a method for determining following distance, in accordance with at least one exemplary implementation.
Figure 15 illustrates image data showing vertical positions for use with a following distance determination model, in accordance with at least one exemplary implementation.
Figure 16 is a side view of a scenario for calibrating vertical positions in image data, in accordance with at least one illustrated implementation.
Figure 17 illustrates transformed image data showing vertical positions for use with a following distance determination model, in accordance with at least one exemplary implementation.

DETAILED DESCRIPTION

The present disclosure details systems and methods for segmenting and/or managing segmented image data, for image data pertinent to vehicles.
Generally, "segmented" image data refers to image data having multiple sets of data, where each set of data represents a respective region. By segmenting the image data, different sets of the segmented data can have different properties, such as pixel density.
As used in this disclosure, a "following" situation refers to a situation where a "following vehicle" is travelling behind a "lead vehicle", in the same direction as the lead vehicle. In this context, "following" does not necessarily mean that the following vehicle is actively pursuing the lead vehicle (e.g. to the destination of the lead vehicle), but rather that the following vehicle is travelling behind the lead vehicle, for at least a moment in time. Lead vehicles and following vehicles are commonly referred to as first and second vehicles throughout this disclosure.

Models (e.g. algorithms, artificial intelligence, and/or machine learning models) for identifying objects or features in image data are discussed herein. Generally, a machine learning model is trained based on a set of training data, after which the model becomes able to analyze input data and reliably detect features or make determinations based on the input data.

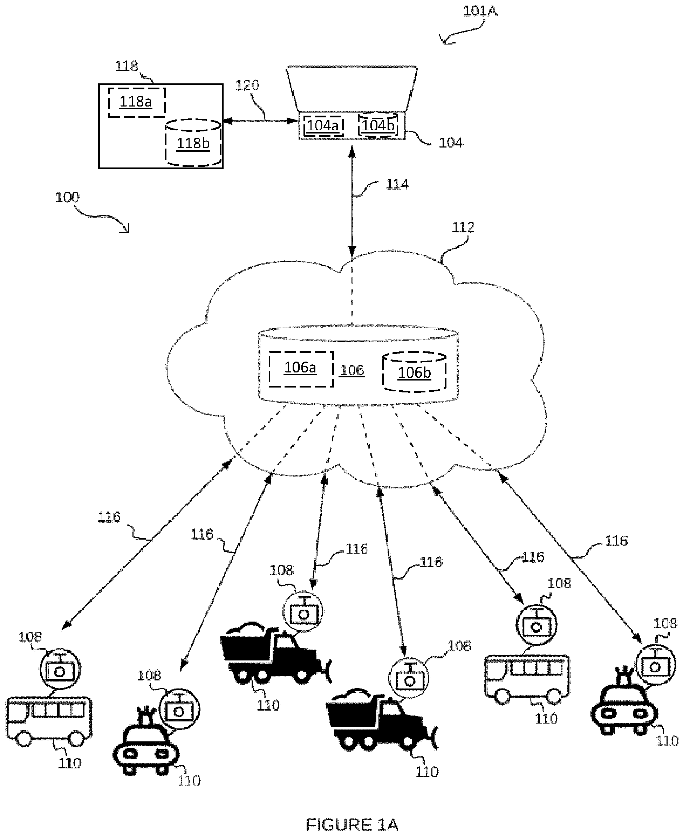

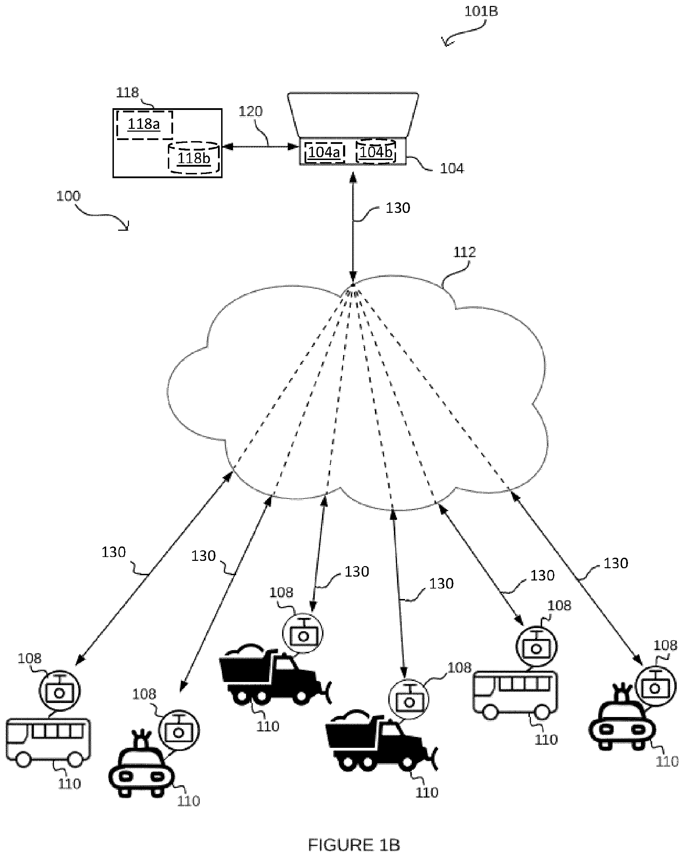

Figure 1A and Figure 1B illustrate block diagrams of exemplary mobile image systems 101A and 101B, respectively, and exemplary communication network 100 through which mobile image systems 101A and 101B operate. In many of the implementations discussed herein, communication network 100 is optional. That is, in some implementations segmenting of image data or management of segmented image data can be performed entirely at a device local to a vehicle (also referred to as a "vehicle device"). Software or firmware updates, updates to models executable at the vehicle device, or provision of data (such as image data) from the vehicle device, can be performed by physical distribution (e.g. by connecting the vehicle device to another device to transfer data, or by using a portable storage medium to transfer the data), thus obviating the need for communication network 100. Alternatively, communication network 100 can be used to distribute data to and/or from vehicle devices (e.g. by sending software/firmware/models to vehicle devices for download, or receiving data such as image data from vehicle devices by upload).

Communication network 100 may include one or more computing systems and may be any suitable combination of networks or portions thereof to facilitate communication between network components. Some examples of networks include, Wide Area Networks (WANs), Local Area Networks (LANs), Wireless Wide Area Networks (WWANs), data networks, cellular networks, voice networks, among other networks, which may be wired and/or wireless. Communication network 100 may operate according to one or more communication protocols, such as, General Packet Radio Service (GPRS), Universal Mobile Telecommunications Service (UMTS), GSM®, Enhanced Data Rates for GSM Evolution (EDGE), LTE™, CDMA, LPWAN, Wi-Fi®, Bluetooth®, Ethernet, HTTP/S, TCP, and CoAP/DTLS, or other suitable protocol. Communication network 100 may take other forms as well.

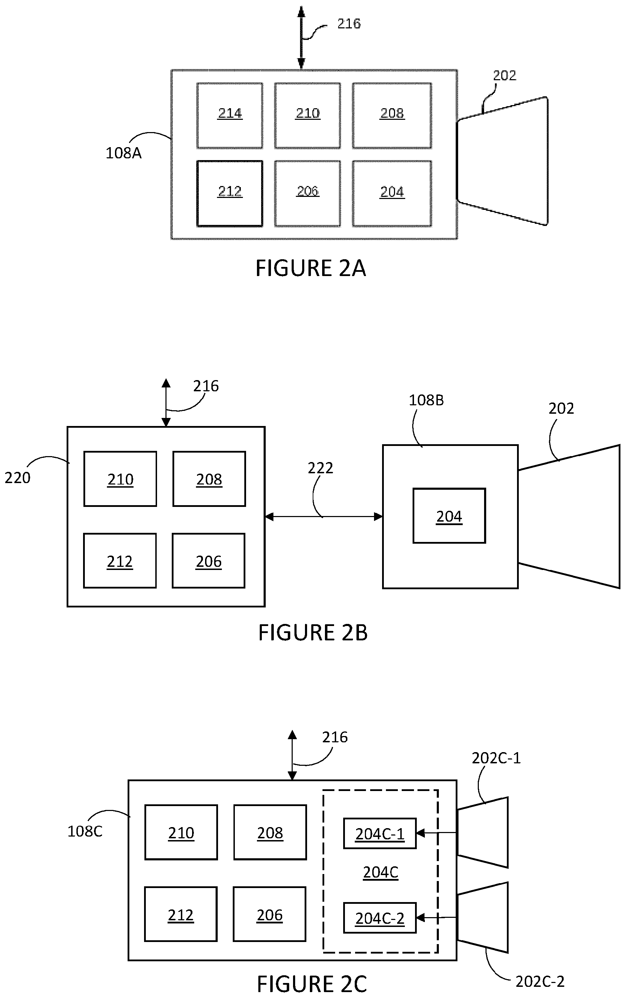

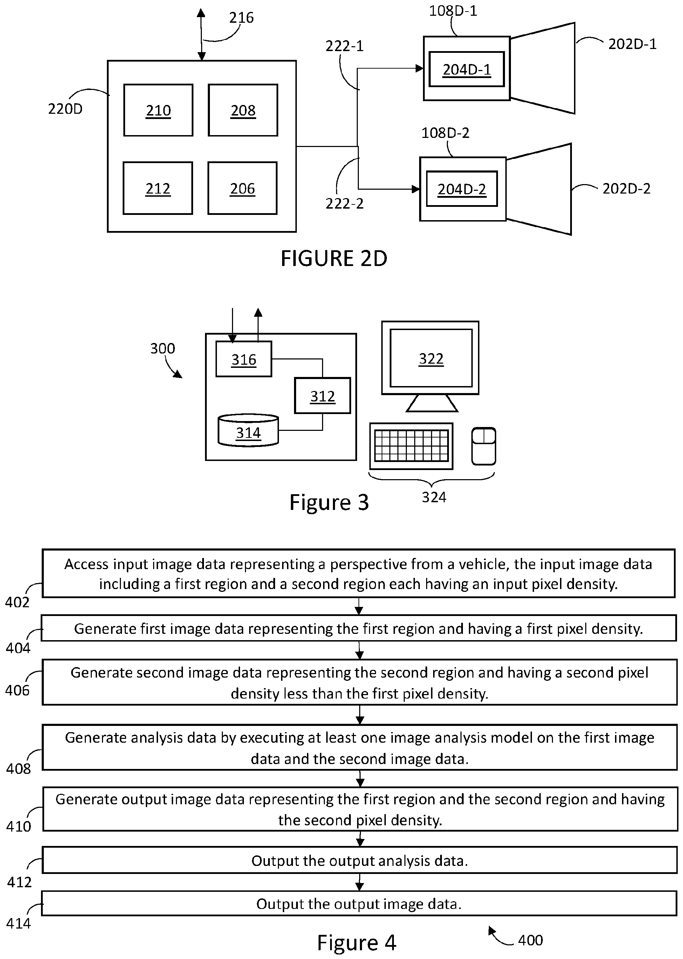

Mobile image system 101A includes a plurality of image capture devices 108, which can comprise (and be referred to herein) as smart video cameras (SVCs), though are not strictly limited as such. The plurality of image capture devices 108 are positioned at (e.g. mounted in/on, or placed within or on) a plurality of vehicles 110. Further, in some implementations more than one image capture device or more than one piece of image capture hardware can be positioned at each vehicle (or any particular vehicles), as is discussed in more detail later with reference to Figures 2C and 2D. Image capture system 101A also includes cloud server 106, client device 104 and local server 118. Client device 104 is communicatively coupled to local server 118 via communication link 120. Client device 104 is also shown as including at least one processor 104a and at least one non-transitory processor-readable storage medium 104b. The at least one processor 104a can perform acts such as determination, generation, identification, data analysis, processing, and other appropriate acts, such as acts in the methods described herein. The at least one non-transitory processor-readable storage medium 104b can store any appropriate data, including processor-executable instructions which when executed by the at least one processor 104a cause the client device 104 to perform acts, such as acts of the methods described herein. An exemplary client device may include a personal computer, server, a system, a combination of subsystems, and devices. Specific and non-limiting examples of an image capture device or smart video camera include a Netradyne® video camera and a Nauto® video camera. Reference to a "camera" in this disclosure can include a smart video camera, but may also include a more basic camera. In this regard, the term "camera" can be used interchangeably with "image capture device". Each image capture device 108 is communicatively coupled to cloud server 106 in cloud 112 via a respective communication link 116. For example, each image capture device 108 and the cloud server 106 are configured to wirelessly communicate to each other. Cloud server 106 is also shown as including at least one processor 106a and at least one non-transitory processor-readable storage medium 106b. The at least one processor 106a can perform acts such as determination, generation, identification, data analysis, processing, and other appropriate acts, such as acts in the methods described herein. The at least one non-transitory processor-readable storage medium 106b can store any appropriate data, including processor-executable instructions which when executed by the at least one processor 106a cause the cloud server 106 to perform acts, such as acts of the methods described herein. Cloud server 106 is communicatively coupled to client device 104 via communication link 114. For example, cloud server 106 and client device 104 are configured to wirelessly communicate to each other. As another example, cloud server 106 and client device 104 are configured to communicate with each other over a wired connection. In some implementations, local server 118 may be a remote server from client device 104. Local server 118 is also shown as including at least one processor 118a and at least one non-transitory processor-readable storage medium 118b. The at least one processor 118a can perform acts such as determination, generation, identification, data analysis, processing, and other appropriate acts, such as acts in the methods described herein. The at least one non-transitory processor-readable storage medium 118b can store any appropriate data, including processor-executable instructions which when executed by the at least one processor 118a cause the local server 118 to perform acts, such as acts of the methods described herein.

Mobile image system 101B in Figure 1B includes a plurality of image capture devices 108, positioned at a plurality of vehicles 110, similar to in Figure 1A. Image system 101B also includes client device 104 and local server 118, similar to in Figure 1A. In the example of Figure 1B, client device 104 is communicatively coupled to local server 118 via communication link 120. An exemplary client device may include a personal computer, server, a system, a combination of systems subsystems, and devices. Specific and non-limiting examples of an image capture device include a Netradyne® video camera and a Nauto® video camera. Each image capture device 108 is communicatively coupled to client device 104 via a respective communication link 130. For example, each image capture device 108 is configured to wirelessly communicate with client device 104. In some implementations, local server 118 may be a remote server from client device 104. The description of components in mobile image system 101A in Figure 1A is applicable to similarly labelled components in mobile surveillance system 101B in Figure 1B.

Specific and non-limiting examples of vehicle types which each of vehicles 110 can be include: a government owned and operated vehicle, (e.g., as a vehicle for snow clearing, infrastructure maintenance, police enforcement), a public transportation vehicle, (e.g., bus, train), and a privately owned vehicle, (e.g., taxi, courier vehicle), among others.

An image capture device 108 (or more than one image capture device) may be mounted to or positioned at a vehicle 110 in a manner such that image capture device 108 captures image data of the environment outside the vehicle 110, e.g., towards the windshield, towards a window, atop the vehicle, etc. Additionally, and/or optionally, an image capture device 108 may be mounted to or positioned at a vehicle 110 in a manner such that the image capture device 108 captures image data of the interior of the vehicle. Interior-facing image capture devices 108 may be useful for detecting an event including detecting a person(s) of interest.

Alternatively, and/or optionally, mobile image systems 101A, 101B further include one or more image capture devices 108 coupled to a person and/or object wherein the object is not a vehicle. For example, an image capture device 108 can be coupled to a person, e.g., a helmet of a motorcycle driver.

Now referring to Figure 2A, shown is a simplified block diagram of exemplary image capture device 108A according to one implementation (as a smart video camera). Image capture device 108A as shown in FIG. 2A can be implemented as any of the image capture devices 108 shown in Figures 1A and 1B. Image capture device 108A includes lens 202, optoelectronics 204, at least one processor 206, location module 208 (e.g., including a GPS receiver), wireless communication module 210 (e.g., including a 4G or 5G communication module for providing cellular connectivity) and at least one non-transitory processor-readable storage medium 212. Optionally, the at least one non-transitory processor-readable storage medium 212 includes another non-transitory processor-readable storage medium 214 (or includes any appropriate number of additional non-transitory processor-readable storage mediums). In the context of this disclosure, the term "datastore" refers to a non-transitory processor-readable storage medium. In some implementations, a single non-transitory processor-readable storage medium corresponds to a single datastore. In other implementations, a non-transitory processor-readable storage medium can be virtually partitioned to include a plurality of "datastores". Wireless communication module 210 is operable to communicate (shown as communication interface 216) with other devices (e.g. cloud device 106 or client device 104 discussed with reference to Figures 1A and 1B) over a communication network (e.g. cloud 112 discussed with reference to Figures 1A and 1B). Image capture device 108A can also be referred to as a vehicle device, in that image capture device 108A is positionable or installable at a vehicle.

Now referring to Figure 2B, shown is a simplified block diagram of exemplary image capture device 108B according to one implementation (as a camera which is coupled to a peripheral device, such as a vehicle device). Figure 2B includes many components with the same reference number as components discussed with reference to Figure 2A. The description of such components in Figure 2A is applicable to the similarly numbered components in Figure 2B. In Figure 2B, image capture device 108B includes lens 202 and optoelectronics 204. In this implementation, image capture device 108B is itself directed to capturing image data, which is in turn provided to a peripheral device 220 via a communication interface 222 (e.g. a wired or wireless communication interface). In some implementations, peripheral device 220 is a vehicle device, such as a telematics monitoring device positioned at a vehicle. In other implementations, peripheral device 220 comprises a collection of components integrated into a vehicle which communicate with each other (e.g. OEM integrated electronics). In Figure 2B, peripheral device 220 is shown as including the at least one processor 206, the location module 208, the wireless communication module 210, and the at least one non-transitory processor-readable storage medium 212, similar to the components included in image capture device 108A in Figure 2A. While not illustrated in Figure 2B to reduce clutter, the at least one non-transitory processor-readable storage medium 212 optionally includes any appropriate number of additional non-transitory processor-readable storage mediums. Wireless communication module 210 is operable to communicate (shown as communication interface 216) with other devices (e.g. cloud device 106 or client device 104 discussed with reference to Figures 1A and 1B) over a communication network (e.g. cloud 112 discussed with reference to Figures 1A and 1B).

Now referring to Figure 2C, shown is a simplified block diagram of exemplary image capture device 108C according to one implementation (as a camera which includes multiple sets of image capture hardware). Figure 2C includes many components with the same reference number as components discussed with reference to Figure 2A. The description of such components in Figure 2A is applicable to the similarly numbered components in Figure 2C. In Figure 2C, image capture device 108C includes a first lens 202C-1, a second lens 204C-2, first optoelectronics 204C-1, and second optoelectronics 204C-2. While two lenses and two optoelectronics are shown, any appropriate quantity of lenses or optoelectronics can be included as appropriate for a given application.

First optoelectronics 204C-1 and second optoelectronics 204C-2 are shown in Figure 2C grouped as optoelectronics 204C. In some implementations, each optoelectronics component (first optoelectronics 204C-1 and second optoelectronics 204C-2) can be separate components (e.g. physically distinct image sensors), each component associated with a respective lens (in the illustrated example, lens 202C-1 directs incoming light to first optoelectronics 204C-1, and lens 202C-2 directs incoming light to second optoelectronics 204C-2). In other implementations, a plurality of optoelectronics components can be a single component (e.g., a single image sensor), but can be logically grouped (and signals therefrom processed accordingly). For example, first optoelectronics 204C-1 can be a first region of a common image sensor with lens 202C-1 directing incoming light to this first region, and second opto-electronics 204C-2 can be a second region of the common image sensor with lens 202C-2 directing incoming light to this second region. These examples can be extended to any appropriate number of optoelectronics.

In the implementation of Figure 2C, image capture device 108C further includes at least one processor 206, location module 208 (e.g., including a GPS receiver), wireless communication module 210 (e.g., including a 4G or 5G communication module for providing cellular connectivity) and at least one non-transitory processor-readable storage medium 212, similar to as discussed earlier with regards to Figure 2A. Unless context dictates otherwise, description of Figure 2A is also applicable to Figure 2C, and is not repeated for brevity. Similar to the example of Figure 2A, image capture device 108C can also be referred to as a vehicle device, in that image capture device 108C is positionable or installable at a vehicle, and can communicate with other devices (e.g. cloud device 106 or client device 104 discussed with reference to Figures 1A and 1B) over a communication network (e.g. cloud 112 discussed with reference to Figures 1A and 1B).

Now referring to Figure 2D, shown is a simplified block diagram of exemplary image capture devices 108D-1 and 108D-2 according to one implementation. Figure 2D includes many components with the same reference number as components discussed with reference to Figures 2A and 2B. The description of such components in Figures 2A and 2B is applicable to the similarly numbered components in Figure 2D. In Figure 2D, image capture device 108D-1 includes a first lens 202D-1 and first optoelectronics 204D-1, and image capture device 108D-2 includes a second lens 202D-2 and second optoelectronics 204D-2. In the illustrated example, lens 202D-1 directs incoming light to optoelectronics 204D-1 (or an image sensor thereof), and lens 202D-2 directs incoming light to optoelectronics 204D-2 (or an image sensor thereof). While two image capture devices with respective lenses and optoelectronics are shown, any appropriate quantity of image capture devices, lenses or optoelectronics can be included as appropriate for a given application.

In the implementation of Figure 2D, image capture devices 108D-1 and 108D-2 are themselves directed to capturing respective image data, which is in turn provided to a peripheral device 220D via respective communication interfaces 222-1 and 222-2 (e.g. wired or wireless communication interfaces). In some implementations, peripheral device 220D is vehicle device, such as a telematics monitoring device positioned at a vehicle. In other implementations, peripheral device 220D comprises a collection of components integrated into a vehicle which communicate with each other (e.g. OEM integrated electronics). Peripheral device 220D in Figure 2D is similar to peripheral device 220 in Figure 2B; description of peripheral device 220 in Figure 2B is fully applicable to peripheral device 220D in Figure 2D, and is not repeated for brevity.

In the illustrative example of Figure 2D, each image capture device includes one lens and one corresponding set of optoelectronics. However, in some implementations, a hybrid implementation could be utilized, where a plurality of image capture devices are utilized (as in Figure 2D), but each image capture device can include a plurality of lenses and corresponding optoelectronics (as in Figure 2C).

Collectively, reference to an image capture device 108 or a plurality of image capture devices 108 can include image capture device 108A in Figure 2A, image capture device 108B in Figure 2B, image capture device 108C in Figure 2C, or image capture devices 108D-1 or 108D-2 in Figure 2D. Further, reference to an image capture device performing acts (such as in the methods discussed herein) can also refer to the peripheral device 220 or the peripheral device 220D performing such acts. For example, reference to an image capture device performing processing, determination, generating, identification, storing of data, transmission, or similar acts can refer to an image capture device and peripheral device in combination performing these acts.

Figure 3 is a schematic view of an operator device 300, which could be used for management and use in any of the implementations discussed herein, and in particular is useful as a server-side device. For example, device 300 could be used as client device 104 in Figures 1A and 1B, or as a user interface device to provide input to these devices. Device 300 as illustrated includes at least one processor 312, at least one non-transitory processor-readable storage medium 314, and a communication interface 316. The non-transitory processor-readable storage medium 314 can have processor-readable instructions stored thereon which, when executed by the at least one processor 312 cause the device 300 to perform appropriate operations for the methods described herein. Communication interface 316 can be a wired or wireless interface, through which data and inputs can be provided to device 300, and through which data and outputs can be provided by device 300. For example, location data for a plurality of vehicles can be received from a telematics device or system by communication interface 316, for processing and analysis by the at least one processor 312. Resulting analysis can also be output by communication interface 316.

Figure 3 also illustrates exemplary input and output devices through which a user or operator can interact with device 300. In particular, Figure 3 shows a display 322, which can display outputs from device 300. Other output devices could be provided such as speakers, or any other appropriate output device. Figure 3 also shows a keyboard and mouse 324, which can be used to provide inputs to the device 300. Other input devices could also be used, such as a touchscreen, microphone, trackpad, or any other appropriate input device. Although the input and output devices illustrated in Figure 3 appear in the form of those used with a desktop computer, other forms of devices could also be used, such as portable devices like a laptop, smartphone, PDA, tablet, or any other appropriate device. Further, a device to which a user provides input and receives output can be remote from the device 300. For example, the device including the at least one processor 312, the at least one non-transitory processor-readable storage medium 314, and the communication interface 316 can be a server, which is remote from a workstation or device with which the user interacts.

Figure 4 is a flowchart diagram which illustrates an exemplary method 400 for segmenting image data, managing segmented image data, and/or utilizing segmented image data. Method 400 as illustrated includes acts 402, 404, 406, 408, 410, 412 and 414. One skilled in the art will appreciate that additional acts could be added, acts could be removed, or acts could be reordered as appropriate for a given application. With reference to the examples illustrated in Figures 1A, 1B, 2A, 2B, 2C, 2D, and 3, acts can be performed by appropriate components of the discussed systems or devices. For example, at least some acts of method 400 can be performed at an image capture device such as image capture device 108A discussed with reference to Figure 2A or image capture device 108C discussed with reference to Figure 2C, and/or a peripheral device such as peripheral device 220 discussed with reference to Figure 2B or peripheral device 220D discussed with reference to Figure 2D. As another example, at least some acts of method 400 can be performed at a device remote from a vehicle, such as client device 104 and/or local server 118 discussed with reference to Figures 1A and 1B, and/or cloud device 106 discussed with reference to Figure 1A.

Reference to "at least one processor" or "a processor" performing acts of any of the methods herein can refer to any appropriate processor (such as any of processors 206 in Figures 2A, 2B, 2C, or 2D). Further, at least one non-transitory processor-readable storage medium (such as non transitory processor-readable storage mediums 212 or 214, as non-limiting examples) can store processor-executable instructions, which when executed by a respective at least one processor cause the corresponding system or device to perform a given act of any of the methods discussed herein.

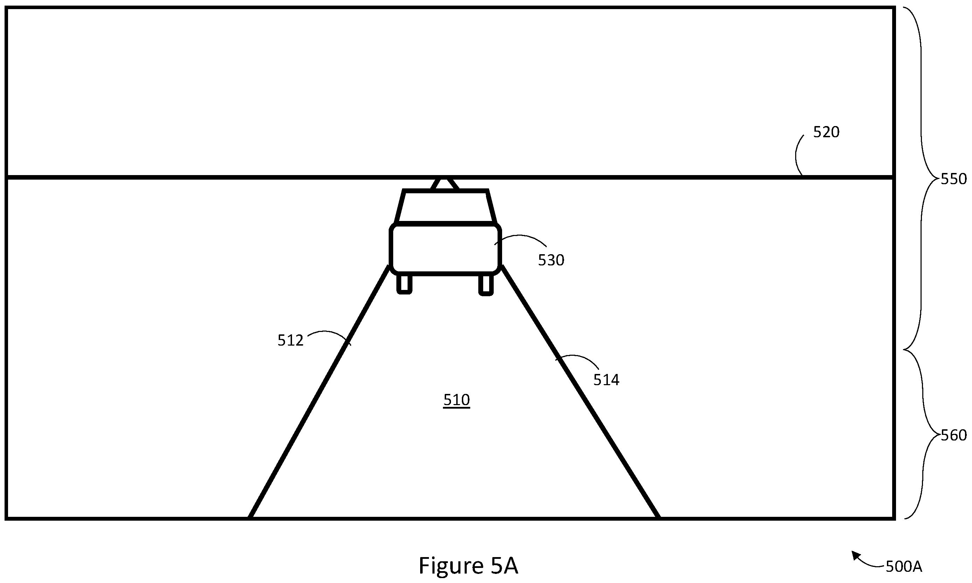

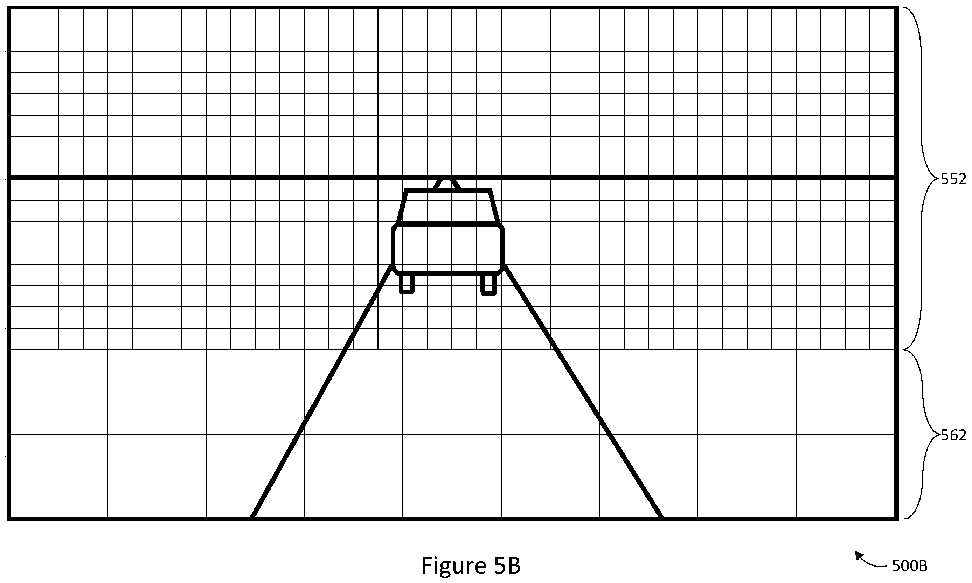

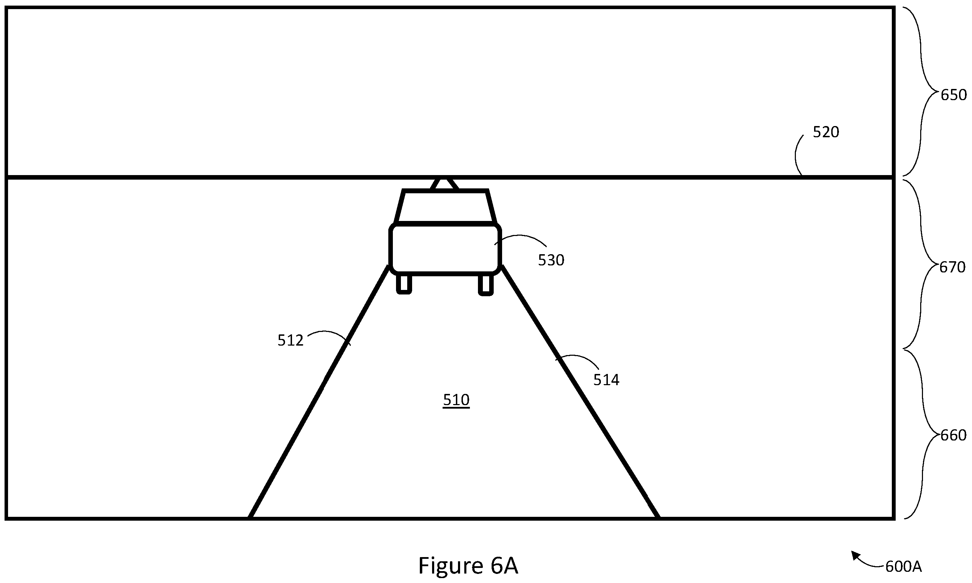

Method 400 is discussed below with reference to a specific example shown in Figures 5A and 5B, for ease of understanding. However, one skilled in the art will appreciate that method 400 can be applied to any appropriate example (such as the examples of Figure 6A, 6B, 7A, 7B, 8A, and 8B), and that Figures 5A and 5B are merely exemplary.

Figure 5A illustrates image 500A. Image 500A represents an image captured by an image capture device positioned at a vehicle (such as any of image capture devices 108, 108A, 108B, 108C, or 108D), from a perspective of the vehicle. In the particular example of Figure 5A, the image 500A represents an image captured from a forward-facing camera (dash-cam). Image 500A includes a representation of a roadway 510 on which vehicles can travel, delineated by boundaries 512 and 514, and extending to horizon 520. Image 500A also includes a representation of another vehicle 530, which travels in front of the vehicle in which the image capture device which captured image 500A is positioned.

In some implementations, image 500A as shown is raw data captured by an image capture device. In other implementations, image 500A as shown has been processed and/or "cleaned up". For example, image 500A as shown in Figure 5A can be a cropped version of raw image data (to remove edge data and/or produce image 500A having a certain aspect ratio. As another example, at least one distortion (or anti-distortion) transformation can be applied to raw image data, for example to compensate for characteristics of raw image data such as lens perspective or distortion.

Image 500A shows roadway 510 as being a single-lane roadway for simplicity, but image data could be captured of roadways having any appropriate number of lanes. Further, image data captured by an image captured device can include representations of any pertinent features or objects; what is shown in Figure 5A is a non-limiting example. Image 500A is also shown as having two regions: a first region 550 and a second region 560. In this example, the first region 550 and the second region 560 are horizontal bands of the image, though in other examples the regions can have different shapes. Image regions and corresponding image data are discussed in more detail later.

Returning to method 400, at 402, input image data is accessed. Image 500A in Figure 5A is an example of such input image data. In some implementations, act 402 includes capturing the input image data by an image capture device (such as any of image capture devices 108). In other implementations, act 402 comprises accessing previously captured image data. For example, image data can be captured by an image capture device and stored at a non-transitory processor-readable storage medium (such as non-transitory processor-readable storage mediums 212 or 214). In such implementations, act 402 can comprise retrieving the input image data as stored. In other implementations, act 402 can comprise receiving the input image data as provided by another device (such as an image capture device). For example, act 402 can comprise a peripheral device (such as peripheral device 220 or 220D) receiving the input image data from an image capture device (such as image capture device 108B or 108D).

At least one processor of the system or device which performs method 400 can optionally preprocess the accessed input image data as appropriate. For example, the input image data can be cropped to a defined resolution, or image correction can be applied such as distortion to compensate for skewing in the image due to properties of the image capture device. As examples, radial distortion and/or tangential distortion of the image data can be compensated for. In some implementations, the accessed image data is already pre-processed to be of a desired resolution and/or to have distortion corrected, prior to access and utilization in method 400.

In the context of method 400, the input image data accessed at 402 has a first pixel density. Throughout this disclosure, the term "pixel density" generally refers to a quantity of pixels in image data or in a region of image data. Alternatively, pixel density can be referred to as resolution.

At 404, at least one processor of the device which performs method 400 generates first image data representing the first region, and having the first pixel density. In some implementations, the first pixel density is equal to the input pixel density. In such implementations, generating the first image data entails packaging a portion of the input data which corresponds to the first region as the first image data. In other implementations, the first pixel density is lower than the input pixel density. In such implementations, generating the first image data further comprises downsampling the portion of the input image data corresponding to the first region to the first pixel density.

At 406, the at least one processor of the device which performs method 400 generates second image data representing the second region, and having a second pixel density less than the first pixel density. In some implementations, generating the second image data entails downsampling a portion of the input image data which corresponds to the second region, and packaging the downsampled data as the second image data.

Figure 5A illustrates image 500B. The image 500B represents the same content as shown in image 500A in Figure 5A. To reduce clutter, objects and features labelled in Figure 5A are not labelled in Figure 5B, but the description of Figure 5A for such objects and features and the scene as represented is fully applicable to Figure 5B.

Figure 5B shows first image data 552, representing first region 550 in Figure 5A. With reference to method 400 in Figure 4, first image data 552 is generated in accordance with act 404. First image data 552 is shown as a grid which is representative of the first pixel density. As mentioned earlier, this first pixel density may be equal to an input pixel density of image 500A in Figure 5A, or may be less than the input pixel density.

Figure 5B also shows second image data 562, representing second region 560 in Figure 5A. With reference to method 400 in Figure 4, second image data 562 is generated in accordance with act 406. Second image data 562 is shown as a grid which is representative of the second pixel density. As mentioned earlier, this second pixel density is less than the first pixel density, which is evident in Figure 5B with the grid of second image data 562 being of larger scale than the grid of first image data 552.

The grids shown for first image data 552 and second image data 562 in Figure 5B are merely representative, which is why the features discussed with reference to Figure 5A are shown with sharper clarity than the pixel densities as illustrated for first image data 552 and second image data 562 would actually show. In practice, any appropriate pixel densities could be used, and typically pixel densities higher than what is illustrated are used. As an example, the input image data could comprise 4K image data (commonly a resolution of approximately 4096 by 2160 pixels), the first image data could comprise 2K image data (commonly a resolution of approximately 2048 by 1080 pixels), and the second image data could comprise 720p image data (commonly a resolution of 1280 by 720 pixels).

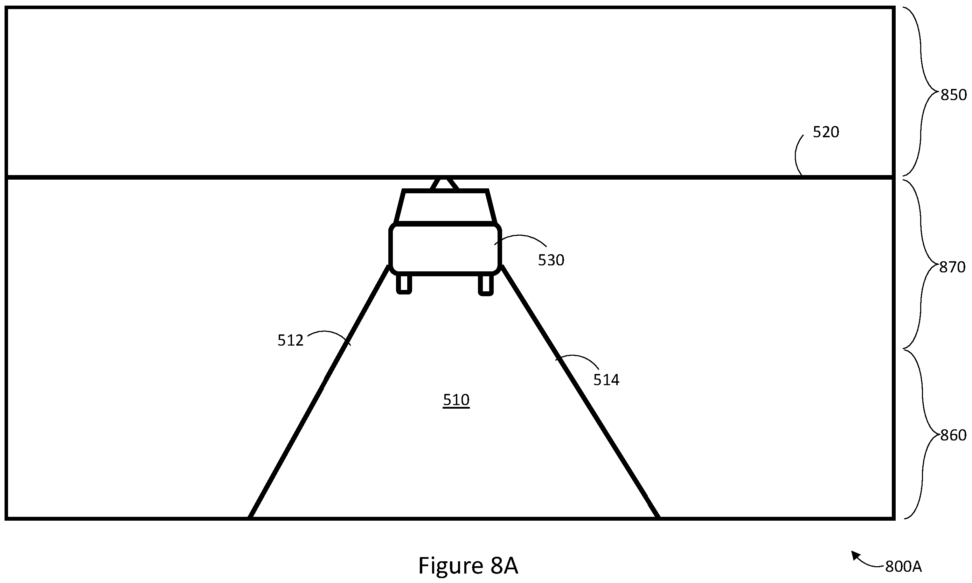

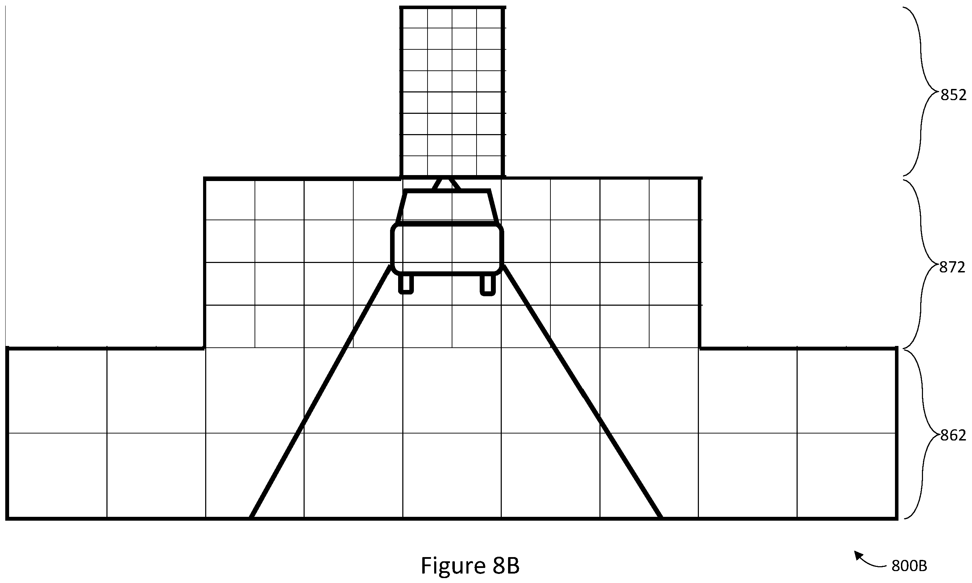

Further, in the example of Figure 5B, first image data 552 represents an entirety of the first region 550, and second image data 562 represents an entirety of the second region 560. However, this is not necessarily the case, as discussed later with reference to Figures 8A and 8B.

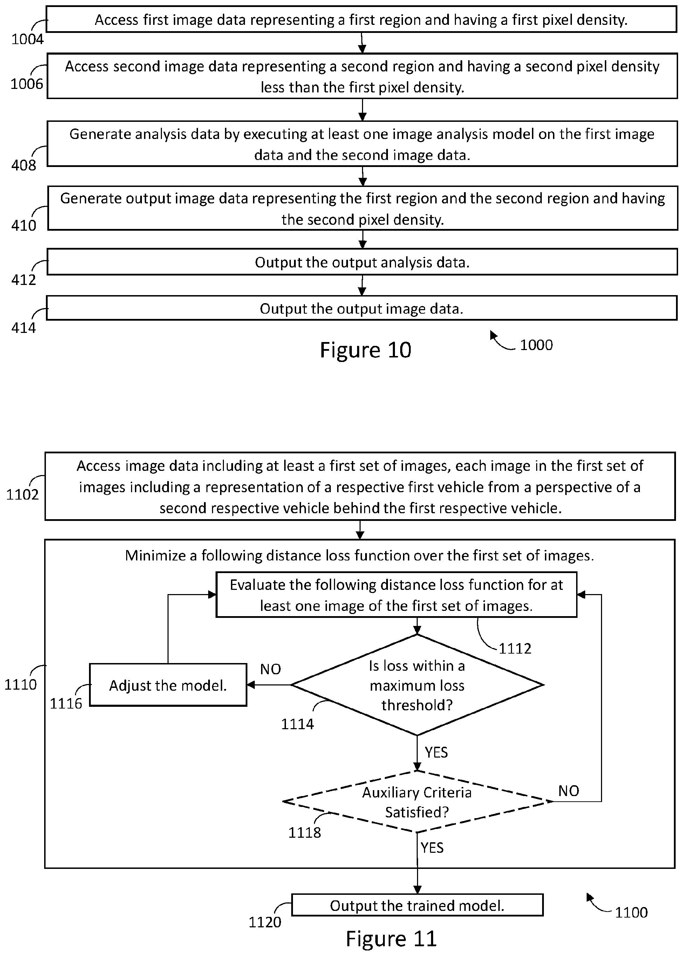

Returning to method 400, at 408, the at least one processor generates analysis data by executing at least one image analysis model on the first image data and the second image data. For example, the at least one processor can run an object or feature detection model (e.g. a YOLO model) on the first image data and the second image, to objects or features. Indications of identified objects or features can be collected as analysis data (e.g. a list of identified objects or features, or an indication of a number of specific objects or features which correspond to a certain class of objects or features which are being searched for). With reference to the examples of Figure 5A and Figure 5B, the at least one processor could identify roadway 510, horizon 520, vehicle 530, or any other features (such as road signage), as non-limiting examples. Object or feature identification for the analysis data is merely exemplary and non-limiting. Additional examples of analysis data are discussed later with reference to Figures 11, 12, 13, 14, 15, 16, and 17. For example, characteristics like following distance can be determined and included in the analysis data.

At 410, the at least one processor generates output image data representing the first region and the second region and having the second pixel density. That is, the output image data is generated to have a uniform pixel density, which is lower than the input pixel density. To achieve this, the at least one processor can downsample the first image data (or the input image data) for the first region to the second pixel density, and package the downsampled first image data with the second image data generated at 406 as the output image data. Packaging the downsampled first image data and the second image data together can alternatively be referred to as stitching or merging the downsampled first image data and the second image data. Alternatively, the input image data for the first region and for the second region can be downsampled to the second pixel density, thus producing output image data including both the first region and the second region at the second pixel density.

At 412, the analysis data is output. At 414, the output image data is output. In some implementations, outputting the analysis data and/or outputting the output image data comprises outputting the analysis data and/or outputting the output image data (respectively) to at least one non-transitory processor-readable storage medium at the vehicle device (e.g. non-transitory processor-readable storage mediums 212 or 214). That is, the analysis data and/or output image data are stored at the vehicle device (for later access or use). In some implementations, outputting the analysis data and/or outputting the output image data comprises transmitting, by at communication interface of the vehicle device, the analysis data and/or outputting the output image data (respectively) to at least one device remote from the vehicle device (e.g. any of communication interfaces 216 can transmit the analysis data and/or output image data to any of client device 104, cloud server 106, or local server 118, eg. via any of communication links 116, 114, 120, 130, and/or cloud 112). The remote device can receive the analysis data and/or output image data, and store the same at a non-transitory processor-readable medium thereof, and/or perform further analysis or used based thereon.

Storing and transmitting the analysis data and/or output image data are not exclusive to each other. In some implementations, the analysis data can be stored at the vehicle device and sent to the remote device. In some implementations, the output image data can be stored at the vehicle device and sent to the remote device (e.g. selective transmission of the output image data in response to a request). Further, what is done with the analysis data is not limiting as to what is done with the output image data. That is, the analysis data can be stored at the vehicle device and/or transmitted to the remote device, and the output image data can be stored at the vehicle device and/or transmitted to the remote device, without necessarily being inhibited by whether the analysis data is stored at the vehicle device or transmitted to the remote device.

Method 400 advantageously optimizes image data for processing, storing, and transmission. By generating image data with a lower pixel density than an input pixel density (as in act 406 and optionally act 404 of method 400), processing burden for analysis of the image data as in act 408 is reduced. That is, because there are less pixels to analyze, processing resource consumption for analysis is reduced. Through effective region delineation, accurate image analysis can still be attained, with reduced processing burden. With reference to the example of the Figures 5A and 5B, the first region 550 represents content which is generally further from the vehicle (which carries the image capture device which captures image 500A) than second region 560. Consequently, features or objects of interest which appear in the first region 550 will generally appear smaller than features or objects which appear in the second region 560. As a result, in order to accurately detect or characterize objects or features in the first region 550, image data having greater pixel density may be required compared to detecting or characterizing objects or features in the second region 560. In some cases, particular objects being detected may be required to be represented by a minimum number of pixels in order for accurate detection to be performed, which in turn requires higher pixel density image data for objects which are further away. Stated differently, objects or features can be detected or characterized in the second region 560 based on lower pixel density image data than objects or features in the first region 550. Thus, in the illustrated example, acceptable detection accuracy can be maintained across the image 500A, while reducing the processing burden, by segmenting the image data into select regions with higher pixel density (first region 552) and regions with lower pixel density (second region 562). Selection of regions of images captured by an image capture device can be performed at a time of installing or configuring an image capture device (e.g. optimized based on a specific image capture device installation), or could be performed for image capture devices in bulk (e.g. regions can be selected per image capture device model).

Further, image data can have large file size (especially for many images, as in the case of video data), which is problematic for storing and/or transmitting the image data. Method 400 addresses this by generating the output image data having the second pixel density. That is, an amount of pixels for both the first region and the second region is reduced compared to the input pixel density, thus resulting in the output image data having smaller file size than the input image data. Storage and/or transmission of image data in vehicles is commonly for the purposes of human review later, if necessary. For the purposes of such review, the video data is commonly not required to be of exceedingly high pixel density. Consequently, by generating and outputting the output image data as in method 400, storage and/or transmission burden is reduced, while still providing access to image data which is of sufficient quality for most purposes.

In a preferred implementation, acts of method 400 are performed by appropriate hardware or devices positioned at the vehicle, such as image capture device 108A discussed with reference to Figure 2A or image capture device 108C discussed with reference to Figure 2C, and/or a peripheral device such as peripheral device 220 discussed with reference to Figure 2B or peripheral device 220D discussed with reference to Figure 2D. In this way, data generation and processing is performed at the vehicle prior to transmission or storage of the data (at acts 412 and 414), thereby reducing bandwidth or storage usage, since the resulting output image data is smaller in size than the input image data.

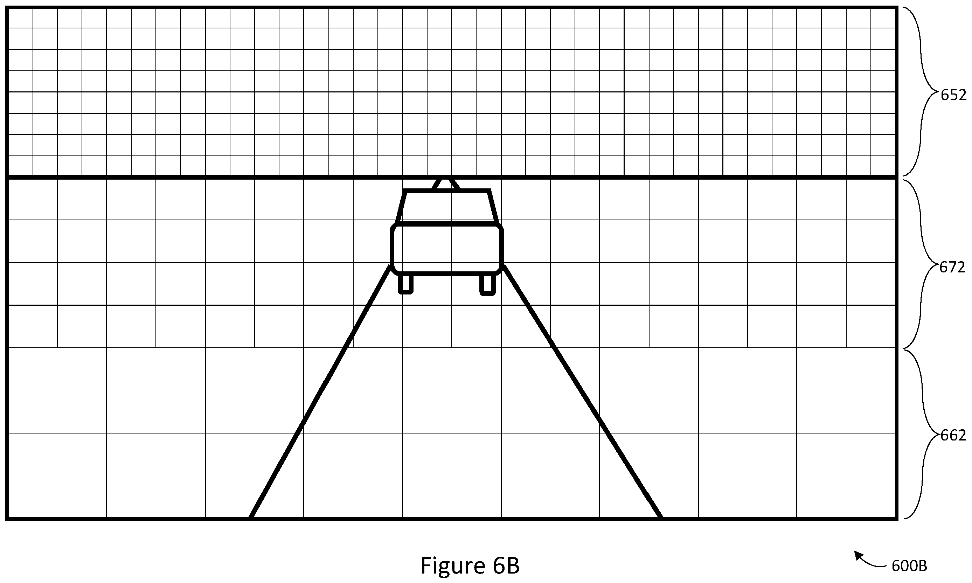

While the discussion above is generally directed to a first region and a second region, an image can be segmented into any appropriate number of regions, and corresponding image data can be generated at a respective pixel density for each region. Figures 6A and 6B illustrate an example in this regard.

Figure 6A illustrates image 600A. The image 600A represents the same content as shown in image 500A in Figure 5A. The description of Figure 5A is fully applicable to Figure 6A, and is not repeated for brevity. One difference between image 600A and image 500A is that image 600A includes three regions: a first region 650, a second region 660, and a third region 670. More regions could be included in other implementations, as appropriate for a given application.

Figure 6B illustrates image 600B. The image 600B represents the same content as shown in image 500A in Figure 5A (similar to Figure 5B). To reduce clutter, objects and features labelled in Figure 5A are not labelled in Figure 6B, but the description of Figure 5A for such objects and features and the scene as represented is fully applicable to Figure 6B.

Like Figure 5B, Figure 6B shows the regions of the image having different pixel density. In particular, Figure 6B shows first image data 652, representing first region 650 in Figure 6A. With reference to method 400 in Figure 4, first image data 652 is generated in accordance with act 404. First image data 652 is shown as a grid which is representative of the first pixel density. As mentioned earlier, this first pixel density may be equal to an input pixel density of image 500A in Figure 5A, or may be less than the input pixel density.

Figure 6B also shows second image data 662, representing second region 660 in Figure 6A. With reference to method 400 in Figure 4, second image data 662 is generated in accordance with act 406. Second image data 662 is shown as a grid which is representative of the second pixel density. As mentioned earlier, this second pixel density is less than the first pixel density, which is evident in Figure 6B with the grid of second image data 662 being of larger scale than the grid of first image data 652.

Figure 6B also shows third image data 672, representing third region 670 in Figure 6A. With reference to method 400 in Figure 4, third image data 672 is generated in an additional act similar to act 406. That is, the at least one processor of the device which performs method 400 generates the third image data 672 representing the third region 670, and having a third pixel density less than the first pixel density and greater than the second pixel density (the third pixel density is between the first pixel density and the second pixel density). In some implementations, generating the third image data entails downsampling a portion of the input image data which corresponds to the third region, and packaging the downsampled data as the third image data. Third image data 672 is shown as a grid which is representative of the third pixel density. As mentioned earlier, this third pixel density is between the first pixel density and the second pixel density, which is evident in Figure 6B with the grid of third image data 672 being of larger scale than the grid of first image data 652, and smaller in scale than the grid of second image data 662. As an example, the input image data could comprise 4K image data (commonly a resolution of approximately 4096 by 2160 pixels), the first image data could comprise 2K image data (commonly a resolution of approximately 2048 by 1080 pixels), the second image data could comprise 480p image data (commonly a resolution of 640 by 480 pixels), and the third image data could comprise 720p image data (commonly a resolution of 1280 by 720 pixels).

Similar to as discussed regarding Figure 5B, the grids shown for first image data 652, second image data 662, and third image data 672 in Figure 6B are merely representative, which is why the features discussed with reference to Figure 5A are shown with sharper clarity than the pixel densities as illustrated for first image data 652, second image data 662, and third image data 672 would actually show. In practice, any appropriate pixel densities could be used, and typically pixel densities higher than what is illustrated are used. Further, in the example of Figure 6B, first image data 652 represents the entire first region 650, second image data 662 represents the entire second region 660, and third image data 672 represents the entire third region 670. However, this is not necessarily the case, as discussed later with reference to Figures 8A and 8B.

Where additional regions are included, and corresponding image data generated (as in the example of Figures 6A and 6B), generation of the analysis data at 408 and generation of the output image data at 410 further includes the additional regions and additional image data. In the example of Figures 6A and 6B, generating the analysis data at 408 comprises generating the analysis data by executing the at least one image analysis model on the first image data, the second image data, and the third image data. Further in the example of Figures 6A and 6B, generating the output image data at 410 comprises generating the output image data representing the first region, the second region, and the third region, at the second pixel density.

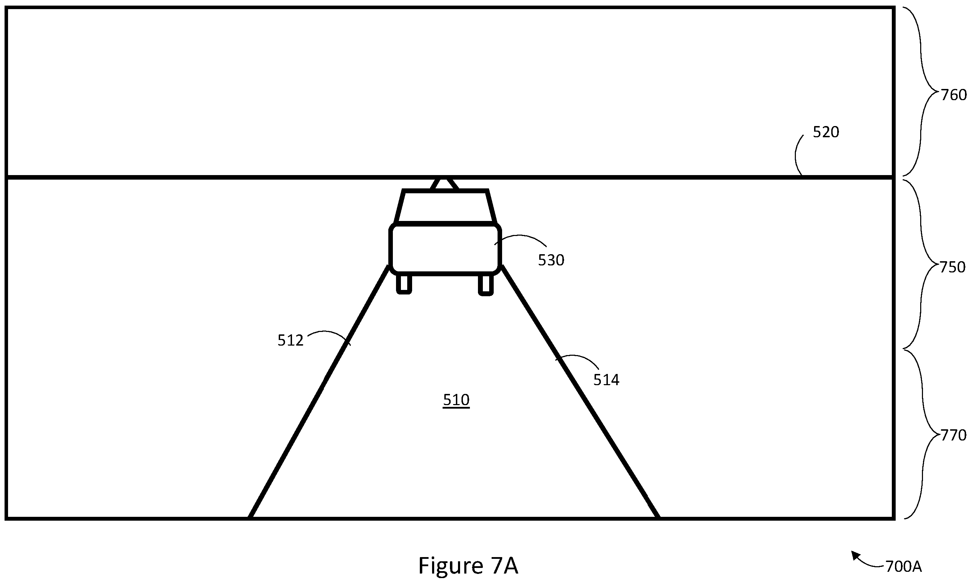

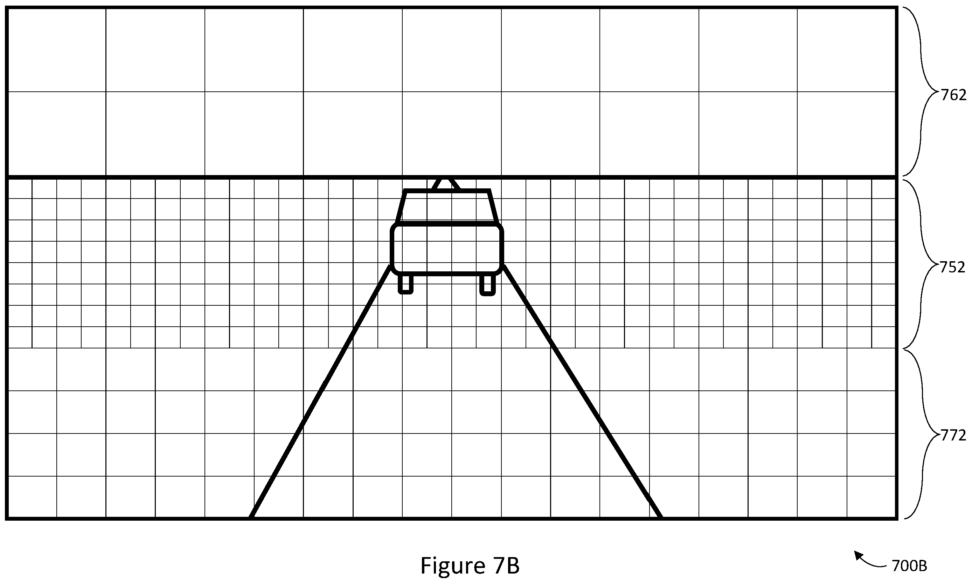

While Figures 6A and 6B shows pixel density for regions of image data decreasing towards the bottom of the image 600B, this is not necessarily the case. Regions and corresponding pixel densities can be arranged in any order, as appropriate for a given application. Figures 7A and 7B illustrate an example in this regard.

Figure 7A illustrates image 700A. The image 700A represents the same content as shown in image 500A in Figure 5A. The description of Figure 5A is fully applicable to Figure 7A, and is not repeated for brevity. One difference between image 700A and image 500A is that image 700A, like image 600A in Figure 6A, includes three regions: a first region 750, a second region 760, and a third region 770. More regions could be included in other implementations, as appropriate for a given application. One difference between Figure 7A and Figure 6A is that in Figure 7A, the order of regions is different. In particular, first region 750 is in the middle of image 700A (versus first region 650 being at the top of image 600A), second region 760 is at the top of image 700A (versus second region 660 being at the bottom of image 600A), and third region 770 is at the bottom of image 700A (versus third region 670 being in the middle of image 600A).

Figure 7B illustrates image 700B. The image 700B represents the same content as shown in image 500A in Figure 5A (similar to Figure 5B). To reduce clutter, objects and features labelled in Figure 5A are not labelled in Figure 7B, but the description of Figure 5A for such objects and features and the scene as represented is fully applicable to Figure 7B.

Like Figure 6B, Figure 7B shows the three regions of the image having different pixel density. In particular, Figure 7B shows first image data 752, representing first region 750 in Figure 7A. Figure 7B also shows second image data 762, representing second region 760 in Figure 7A. Figure 7B also shows third image data 772, representing third region 770 in Figure 7A. Generation of and pixel densities for each of first image data 752, second image data 762, and third image data 772 can be performed similarly to as discussed earlier for first image data 652, second image data 662, and third image data 672, and not repeated for brevity. Similar to as discussed regarding Figures 5B and 6B, the grids shown for first image data 752, second image data 762, and third image data 772 in Figure 7B are merely representative, and in practice any appropriate pixel densities could be used. Further, in the example of Figure 7B, first image data 752 represents the entire first region 750, second image data 762 represents the entire second region 760, and third image data 772 represents the entire third region 770. However, this is not necessarily the case, as discussed later with reference to Figures 8A and 8B.

As can be seen in Figure 7B, the highest pixel density image data (first image data 752 for first region 750) is positioned in the middle of image 700B. The lowest pixel density data (second image data 762 for second region 760) is positioned at the top of image 700B. The intermediate pixel density data (third image data 772 for third region 770) is positioned at the bottom of the image 700B. Such an arrangement of regions can have advantages. In particular, second region 762 generally represents sky positioned above horizon 520. In many cases, it is unlikely that important or pertinent analysis data is generated based on what is visible in the sky (although this is not necessarily the case). As such, by generating the second image data 762 which represents the sky with the lowest pixel density, processor burden is reduced to the greatest extent in a region where relevant analysis data is unlikely to be generated anyway. In contrast, first region 750 represents real-world content which is positioned far enough away that reasonably high pixel density image data is desired for accurate analysis, hence why corresponding image data 752 having the first pixel density is generated for this first region 750. Further, third region 770 represents real-world content where relevant analysis data may be generated, but the content is close enough such that pertinent objects or features as represented in the image data will be of large enough scale that acceptable analysis data can be generated based on intermediate pixel density image data (the second pixel density, in this example).

Generation of the analysis data at 408 and generation of the output image data at 410 for the example of Figure 7A and 7B is similar to as discussed with reference to Figures 6A and 6B, and is not repeated for brevity.

In each of the examples 5A, 5B, 6A, 6B, 7A, and 7B, each of the generated first image data, second image data, and third image data represents an entire corresponding region of the image. However, this is not necessarily the case, and in some implementations the image data can represent a cropped portion of a corresponding region. This is shown by way of example with reference to Figures 8A and 8B, and applies to all of the previous examples.

Figure 8A illustrates image 800A. The image 800A represents the same content as shown in image 500A in Figure 5A. The description of Figure 5A is fully applicable to Figure 8A, and is not repeated for brevity. One difference between image 800A and image 500A is that image 800A, like image 600A in Figure 6A and image 700A in Figure 7A, includes three regions: a first region 850, a second region 860, and a third region 870. More or fewer regions could be included in other implementations, as appropriate for a given application. For example, the discussion of Figures 8A and 8B also applies to images having two regions, such as in the example of Figures 5A and 5B.

Figure 8B illustrates image 800B. The image 800B represents a portion of the same content as shown in image 500A in Figure 5A (similar to Figure 5B). To reduce clutter, objects and features labelled in Figure 5A are not labelled in Figure 8B, but the description of Figure 5A for such objects and features and the scene as represented is fully applicable to Figure 8B.

Like Figures 6B and 7B, Figure 8B shows the three regions of the image having different pixel density. In particular, Figure 8B shows first image data 852, representing first region 850 in Figure 8A. Figure 8B also shows second image data 862, representing second region 860 in Figure 8A. Figure 8B also shows third image data 872, representing third region 870 in Figure 8A. Generation of and pixel densities for each of first image data 852, second image data 862, and third image data 872 can be performed similarly to as discussed earlier for first image data 652, second image data 662, and third image data 672, and not repeated for brevity. Similar to as discussed regarding Figures 5B, 6B, and 7B the grids shown for first image data 852, second image data 862, and third image data 872 in Figure 8B are merely representative, and in practice any appropriate pixel densities could be used. One difference between Figure 8B and Figure 6B is that in Figure 8B, the generated image data for at least some of the regions is cropped. In the illustrated example, first image data 852 for first region 850 is horizontally cropped, such that first image data 852 only includes data representing a portion of the first region 850 close to a horizontal center of image 800A. Further, third image data 872 for third region 870 is horizontally cropped, such that third image data 872 only includes data representing portion of the third region 870 close to a horizontal center of image 800A (though broader than the portion represented by first image data 852). In the illustrated example, second image data 862 representing the second region 860 is not visibly cropped, but in some implementations second image data 862 can also represent a cropped portion of second region 860.

In the example of Figures 8A and 8B, cropping of the image data reduces the amount of image data which will be analyzed at 408, and therefore reduces processing burden. In the illustrated example, by limiting the image data to horizontally central portions of the image, analysis can be limited to portions of the image around roadway 510, and is thus still effective for detection of objects or features pertinent to driving along roadway 510. In alternative implementations, the image data could be cropped to be limited to portions outside of roadway 510. Such implementations could be advantageously for analyzing infrastructure outside of roadway 510, for example.

Where image data is generated to represent cropped portions of regions, generation of output image data at 410 can be handled in different ways.

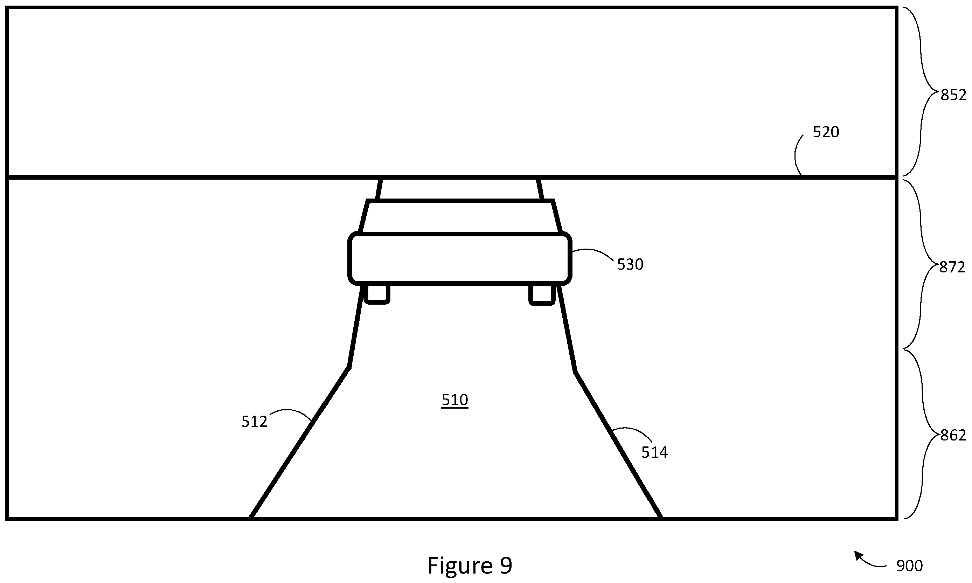

In some implementations, the image data for each region can be packaged, stitched, or merged together, with each pixel being of the same size. Because of the different pixel densities of each image data, the result will appear with regions of higher pixel density (but which were cropped to be smaller) appearing stretched. An example is shown in Figure 9. Figure 9 illustrates output image 900, which represents the same content as shown in image 500A in Figure 5A (and also shown in image 800A in Figure 8A), but shows output image data as generated based on the cropping shown in Figure 8B. In image 900, image data 872 representing third region 870 is stretched horizontally compared to as shown in image 800A, to align the size of pixels in third image data 872 with the size of pixels in second image data 862. Further, while not visible in Figure 9 due to lack of features in first region 850, first image data 852 is also stretched horizontally compared to as shown in image 800A, to align the size of pixels in first image data 852 with the size of pixels in third image data 872.

The stretching described with reference to Figure 9 is not necessarily an active step of stretching of image data. Rather, in storing first image data 852, second image data 862, and third image data 872, the image data can be stored as a pixel array for the entire image 800B. When presented on a display with uniform pixel size, the described "stretching" can simply be a visual result due to the differences in pixel density for respective regions of the image

Figure 10 is a flowchart diagram which illustrates an exemplary method 1000 for segmenting image data, managing segmented image data, and/or utilizing segmented image data. Method 1000 as illustrated includes acts 1004, 1006, 408, 410, 412 and 414. One skilled in the art will appreciate that additional acts could be added, acts could be removed, or acts could be reordered as appropriate for a given application. With reference to the examples illustrated in Figures 1A, 1B, 2C, 2D, and 3, acts can be performed by appropriate components of the discussed systems or devices. For example, at least some acts of method 1000 can be performed at an image capture device such as image capture device 108C discussed with reference to Figure 2C, and/or a peripheral device such as peripheral device 220D discussed with reference to Figure 2D. As another example, at least some acts of method 400 can be performed at a device remote from a vehicle, such as client device 104 and/or local server 118 discussed with reference to Figures 1A and 1B, and/or cloud device 106 discussed with reference to Figure 1A.

Reference to "at least one processor" or "a processor" performing acts of any of the methods herein can refer to any appropriate processor (such as any of processors 206 in Figures 2C or 2D). Further, at least one non-transitory processor-readable storage medium (such as non transitory processor-readable storage mediums 212 or 214, as non-limiting examples) can store processor-executable instructions, which when executed by a respective at least one processor cause the corresponding system or device to perform a given act of any of the methods discussed herein.

Method 1000 is similar in at least some respects to method 400 in Figure 4, and description of method 400 in Figure 4 is applicable to method 1000 in Figure 10 unless context dictates otherwise. Further, the examples discussed above with reference to Figures 5A, 5B, 6A, 6B, 7A, 7B, 8A, 8B, and 9 are also applicable to method 1000. Further, one skilled in the art will appreciate that method 1000 can be applied to any appropriate example, and that Figures 5A, 5B, 6A, 6B, 7A, 7B, 8A, 8B, and 9 are merely exemplary.

One difference between method 1000 in Figure 10 and method 400 in Figure 4 pertains to how image data is gathered. In particular, as discussed above regarding method 400, input image data is accessed at 402, and first and second image data (and additional image data if appropriate) is generated based on the input image data. In method 1000 in Figure 10, image data for different regions is more broadly accessed as discussed below.

At 1004, first image data is accessed representing a first region and having a first pixel density. At 1006, second image data is accessed representing a second region and having a second pixel density less than the first pixel density. With reference to the example of Figures 5A and 5B, at 1004 first image data 552 is accessed which represents first region 550, and at 1006 second image data 562 is accessed representing second region 560. In some implementations, additional image data can be accessed representing additional regions, in a similar manner to acts 1004 and 1006. With reference to the example of Figures 6A and 6B, at 1004 first image data 652 is accessed which represents first region 650, at 1006 second image data 662 is accessed representing second region 660, and third image data 672 is accessed representing region 670. With reference to the example of Figures 7A and 7B, at 1004 first image data 752 is accessed which represents first region 750, at 1006 second image data 762 is accessed representing second region 760, and third image data 772 is accessed representing region 770. With reference to the example of Figures 8A and 8B, at 1004 first image data 852 is accessed which represents a portion of first region 850, at 1006 second image data 862 is accessed representing at least a portion of second region 860, and third image data 872 is accessed representing a at least a portion of region 870.

In method 1000, the image data accessed at 1004 and 1006 (and additional image data, if accessed), can be captured by respective image capture hardware. For example, in image capture device 108C, the first image data can be captured by lens 202C-1 and optoelectronics 204C-1, and the second image data can be captured by lens 202C-2 and optoelectronics 204C-2. As another example with reference to Figure 2D, the first image data can be captured by image capture device 108D-1 (including lens 202D-1 and optoelectronics 204D-1), and the second image data can be captured by image capture device 108D-2 (including lens 202D-2 and optoelectronics 204D-2). Additional image capture devices, lens, and/or optoelectronics can capture additional image data, as appropriate for a given application.

In some implementations, the scope of method 1000 can include capture of each image data (and thus a system or device which performs method 1000 can include image capture hardware which captures the image data). In other implementations, the actual capture of the image data can be outside of the scope of method 1000 (and thus a system or device which performs method 1000 does not include image capture hardware which captures the image data). In such implementations, acts 1004 and 1006 encompass receiving or retrieving the image data (e.g. from image capture hardware via a communication interface, and/or from at least one non-transitory processor-readable storage medium where image data as captured by the image capture hardware is stored).

In some implementations, the image data accessed at 1004 and 1006 can be generated based on input image data as discussed earlier with reference to acts 402, 404, and 406 of method 400.

At least one processor of the system or device which performs method 1000 can optionally preprocess the accessed image data (the first image data and the second image data in the example) as appropriate. For example, the input image data can be cropped to a defined resolution, or image correction can be applied such as distortion to compensate for skewing in the image due to properties of the image capture device. As examples, radial distortion and/or tangential distortion of the image data can be compensated for. Further, the image data can be cropped to eliminate or reduce overlap between what is represented by the different image data. In some implementations, the accessed image data is already pre-processed to be of a desired resolution, to have distortion corrected, and/or to avoid overlap, prior to access and utilization in method 400.

Once accessed, each image data can be accessed by at least one processor which performs subsequent acts of method 1000 (such as any of processors 206). Method 1000 can then proceed to acts 408, 410, 412, and 414, which are similar to acts having the same numbers in method 400. Description of acts 408, 410, 412, and 414 above with regards to method 400 is fully applicable to method 1000, and is not repeated for brevity. This includes description of optional implementations for each of acts 408, 410, 412, and 414, such as how analysis data and/or output image data are generated, how analysis data and/or image data are output, and how different regions in an image are arranged. Similarly to method 400, in a preferred implementation, acts of method 1000 are performed by appropriate hardware or devices positioned at the vehicle, such as image capture device 108A discussed with reference to Figure 2A or image capture device 108C discussed with reference to Figure 2C, and/or a peripheral device such as peripheral device 220 discussed with reference to Figure 2B or peripheral device 220D discussed with reference to Figure 2D. In this way, data generation and processing is performed at the vehicle prior to transmission or storage of the data (at acts 412 and 414), thereby reducing bandwidth or storage usage, since the resulting output image data is smaller in size than the input image data.

In method 1000, the different image data representing respective regions is captured by different image capture hardware, which can have different properties. In particular, first image capture hardware which captures the first image data can have higher resolution (pixel density) than second image capture hardware which captures the second image data. For example, the first image capture hardware can include optoelectronics having more capture pixels and/or a denser array of capture pixels. As another example, the first image capture hardware and the same image capture hardware may be physically similar (e.g. similar capture resolution), but the second image capture hardware may be configured to capture the second image data at a lower resolution (e.g. by deactivating or ignoring data captured by some capture pixels).

As mentioned earlier, generating analysis data as in acts 408 of method 400 and method 1000 comprises executing at least one image analysis model on the first image data and the second image data (and any additional image data representing additional regions, such as third image data representing a third region). The at least one image analysis model can include a number of possible models; some non-limiting examples are discussed below.

In some implementations, generating the analysis data at 408 comprises executing a trained object detection model on the first image data and the second image data (and any additional image data representing additional regions, such as third image data representing a third region). Such an object detection model could comprise a YOLO model, for example. In an exemplary implementation, the object detection model could be trained to detect road signage (such as stop signs, yield signs, speed limit signs, or any other appropriate type of signs). By executing such a signage detection model in act 408, resulting analysis data can include indications of detected signage. Optionally, the analysis data could include confidence scores for each detection. Further, the analysis data can include or be associated with other sensor data, such as location data from a location sensor positioned at the vehicle. For example, the at least one processor of a device which performs method 400 or method 1000 can access analysis data which includes indication of identified signage, and access location data corresponding to each indication of identified signage. By associated each indication of identified signage and location data, location of each identified sign can be determined. Based on this, a signage database can be populated, where signage is indicated along with location of said signage (e.g. on a map). Such a database can be useful for human review and understanding, or for other analysis (e.g. for determining whether signage is effective at guiding driver behavior or not).

In some implementations, generating the analysis data at 408 comprises executing a following distance

EP 4 571 678 A1

detection model on the first image data and the second image data (and any additional image data representing additional regions, such as third image data representing a third region). Any appropriate following distance detection model could be executed, with several examples being disclosed in US Provisional Patent Application Nos. 63/456,179, 63/526,233, 63/537,875, and 63/606,307.

As an example, Figure 11 is a flowchart diagram for training a following distance model, by minimizing a following distance loss function for a set of training images. In particular, Figure 11 is a flowchart diagram which illustrates an exemplary method 1100 for training a machine learning model. Method 1100 as illustrated includes acts 1102, 1110 (including sub-acts 1112, 1114, 1116, and 1118), and 1120. One skilled in the art will appreciate that additional acts could be added, acts could be removed, or acts could be reordered as appropriate for a given application. As an example, sub-act 1118 is shown in dashed lines to highlight that this sub-act is optional. Acts of method 1100 can be performed by appropriate components of the systems or devices discussed earlier with reference to Figures 1A, 1B, 2A, 2B, 2C, 2D, or 3. Importantly, a system or device which performs method 1100 to train the following distance model is not necessarily the same hardware which applies the trained model. In this way, model training and model execution can be performed by discrete systems or devices most suited to the task. For example, a central server (e.g. any of client device 104, cloud server 106, or local server 118) can perform model training, and a device at a vehicle (e.g. image capture devices 108, 108A, 108C, or peripheral device 220 or 220D) can apply the trained model based on image data captured at the vehicle. However, in some implementations, a single device or system can perform all of generating training data, training a machine learning model, and applying the machine learning model.

At 1102, image data is accessed by at least one processor of the device performing method 1100. The image data includes at least a first set of images. The accessed image data can be labelled real-world data, or can be image data generated via simulation. Each image in the first set of images includes a representation of a respective first vehicle from a perspective of a second respective vehicle behind the first vehicle. That is, each image represents a respective instance where a second vehicle is positioned behind (following) a first vehicle. Images 500A, 600A, 700A, 800A illustrate such exemplary following situations, and images of this form can be included in the first set of images. Further, each image in the first set of images is associated with a distance label indicating a distance between the respective first vehicle and the respective second vehicle. Further still, each image in the first set of images is associated with a respective vehicle presence label which indicates whether the first vehicle is present within a meaningful following situation with the second vehicle. In particular, the vehicle presence label can indicate one or both of (i) whether the first vehicle and the second vehicle are within a presence threshold distance of each other, or (ii) whether the first vehicle and the second vehicle are travelling in a same lane of travel. That is, the vehicle presence label indicates whether the second vehicle is actually following the second vehicle (i.e. is within a close enough distance to be meaningful, and/or the second vehicle is actually behind the second vehicle and not in a different lane).

At 1110, a following distance loss function is minimized over the first set of images. Equation (1) below shows the loss function for this exemplary implementation:

$$L = P * |D - d| + (P - p)^2 \qquad (1)$$

In Equation (1), $L$ represents loss. $P$ is the vehicle presence label, where a label of 0 indicates the first vehicle is not within the vehicle presence threshold, and a label of 1 indicates the first vehicle is within the vehicle presence threshold. Vehicle presence as determined by the model is indicated by $p$, and is a decimal number between 0 and 1 which represents confidence by the model that the first vehicle is within the vehicle presence threshold (where a higher value means greater confidence, and vice-versa). $D$ is the value for distance indicated in the distance label, and $d$ is the value for distance as determined by the model.

The first term in Equation (1), $P*|D-d|$, represents the distance regression loss. That is, the difference between the distance as indicated in the label and the distance determined by the model. Where $P = 1$, (vehicle presence label for a particular image indicates that the first vehicle is within the vehicle presence threshold), the first term becomes $|D-d|$, which represents difference between the distance label and the distance determined by the model (i.e., how accurately the model determined distance, where a higher value indicates greater inaccuracy than a low value). Where $P = 0$, (vehicle presence label for a particular image indicates that the first vehicle is not within the vehicle presence threshold), the first term becomes 0, such that loss $L$ becomes only the second term.

The second term in Equation (1), $(P-p)^2$, represents classification loss. That is, the difference between the vehicle presence as indicated in the vehicle presence label and as determined by the model (i.e., how inaccurately the model classifies whether a vehicle is within the vehicle presence threshold). In some exemplary implementations, the vehicle presence threshold is set to 40 meters. However, any vehicle presence threshold could be used, as appropriate for a given application.

In the example of Figure 11, act 1110 includes sub-acts 1112, 1114, 1116, 1118. At 1112, the following distance loss function is evaluated by the at least one processor for at least one image of the first set of images. That is, for the at least

16

one image, the model is applied to determine $p$ and $d$, and subsequently loss $L$ is determined in accordance with Equation (1).

At 1114, the determined loss $L$ is compared to a maximum loss threshold by the at least one processor. If determined loss $L$ is not within the maximum loss threshold, method 1100 proceeds to act 1116 where the model is adjusted (e.g. by adjusting weights and biases of the model with the aim of reducing loss). In one exemplary implementation, backpropagation is implemented to adjust weights and biases of the model. One skilled in the art can implement any appropriate model structure and means for adjusting the model, as appropriate for a given application. After the model is adjusted at 1116, method 1100 returns to act 1112, where the following distance function is evaluated for at least one image of the first set of images. The at least one image for which the following distance loss function is evaluated can be the same at least one image as before, such that the adjustments to the model are "tested" against the same image data. Alternatively, the at least one image for which the following distance loss function is evaluated can be a different at least one image, such that the model is adjusted by moving through the first set of images.

Acts 1112, 1114, and 1116 can be iterated any appropriate number of times, until loss is within the maximum loss threshold at 1114, in which case method 1100 proceeds to 1118. At 1118, auxiliary criteria for the model are evaluated. If the auxiliary criteria are not satisfied, method 1100 returns to act 1112, where the following distance loss function is evaluated. Auxiliary criteria can include various criteria. As one example, auxiliary criteria can require that the loss function be within a maximum loss threshold for each image in the first set of images. That is, even if the loss function is within a maximum loss threshold for a first image, the auxiliary criteria can require that each image be evaluated prior to outputting the trained model. As another example, auxiliary criteria can require that the loss function be within a maximum loss threshold for at least a defined amount of images in the first set of images. That is, even if the loss function is within a maximum loss threshold for a first image, the auxiliary criteria can require that the loss function be within the maximum loss threshold for a defined amount (e.g. 90%) of the images in the first set of images. As another example, auxiliary criteria can require that the loss function be evaluated for at least a defined amount of images (e.g. 90%) in the first set of images.

Act 1118 is optional. In one exemplary implementation, evaluating the following distance loss function for at least one image of the first set of images in act 1112 comprises evaluating the following distance loss function for each image of the first set of images (or for a defined amount of images in the first set of images), such that criteria regarding quantity of images to be evaluated are inherently satisfied.

If the auxiliary criteria are satisfied at 1118 (or if act 1118 is not included), method 1100 proceeds to act 1120. At 1120, the model is considered as a "trained" model, and is output for use. For example, the trained model can be sent to another device for storage, distribution, and/or application, or can be stored at a non-transitory processor-readable storage of the device which performed the training.

Exemplary implementations and usage scenarios for method 1100 (in particular act 1110) are discussed below.

In a first example, at 1112 the distance loss function is determined for a first image. The first image is associated with vehicle presence label $P_1 = 1$ and distance label $D_1 = 3m$. In this case, the model determines vehicle presence $p_1 = 0.9$ and distance as $d_1 = 2.5m$. With these values, evaluating Equation (1) results in a distance loss $L_1 = 0.51$. At 1114, loss $L_1$ is compared to a maximum loss threshold, which in this example is 0.25. Since 0.51 is greater than 0.25, loss $L_1$ is not within the maximum loss threshold, and method 1100 proceeds to act 1116. At 1116, the model is adjusted per a machine learning adjustment process, after which method 1100 proceeds to a second iteration of act 1112. In this first example, the second iteration of act 1112 is run again on the first image. As a result of the adjustments to the model at 1116, the model now determines vehicle presence $p_2 = 0.95$ and distance as $d_2 = 2.9m$. As a result, Equation (1) evaluates to loss $L_2 = 0.1025$. In a second iteration of act 1114, loss $L_2$ is compared to the maximum loss threshold of 0.25. Since 0.1025 is less than 0.25, loss $L_2$ is within the maximum loss threshold. If no auxiliary criteria are specified (i.e. act 1118 is not included), method 1100 proceeds to act 1120, where the trained model is output.

For a case where an auxiliary criteria is specified in the first example, which requires that the loss be within the maximum loss threshold for each image in the first set of images, at 1118 the method returns to 1112. The following distance function is evaluated for a second image at 1112, and method 1100 proceeds to sub-act 1114 (and 1116 if appropriate) similar to as discussed regarding the first image. This cycle is repeated for each image in the first set of images.

In the first example, the model is trained by repeating evaluation of the distance loss function for a first image. As discussed above, this can be performed for each image in the first set of images, until the distance loss function as evaluated for each image is within the maximum loss threshold. Alternatively, this can be performed until the distance loss function as evaluated for a threshold amount of images, such as 90% of the images, is within the maximum loss threshold. In this way, loss can be minimized for each image (or a satisfactory amount of images) in the first set of images.

In a second example, at 1112 the distance loss function is determined for the first image similarly as discussed above for the first example. As above, evaluating Equation (1) results in a distance loss $L_1 = 0.51$. At 1114, loss $L_1$ is compared to a maximum loss threshold, which in this example is 0.25. Since 0.51 is greater than 0.25, loss $L_1$ is not within the maximum loss threshold, and method 1100 proceeds to act 1116. At 1116, the model is adjusted per a machine learning adjustment process, after which method 1100 proceeds to a second iteration of act 1112. In this second example, the second iteration of act 1112 is run instead on a second image. The second image is associated with vehicle presence label

$P_2 = 1$ and distance label $D_2 = 2m$. In this case, the model determines vehicle presence $p_2 = 0.93$ and distance as $d_2 = 1.7m$. With these values, evaluating Equation (1) results in a distance loss $L_2 = 0.3049$. At 1114, loss $L_2$ is compared to a maximum loss threshold, which in this example is 0.25. Since 0.3049 is greater than 0.25, loss $L_2$ is not within the maximum loss threshold, and method 1100 proceeds to act 1116. At 1116, the model is again adjusted per a machine learning adjustment process, after which method 1100 proceeds to a third iteration of act 1112. In this second example, the third iteration of act 1112 is run instead on a third image. The third image is associated with vehicle presence label $P_3 = 1$ and distance label $D_3 = 3.5m$. In this case, the model determines vehicle presence $p_3 = 0.95$ and distance as $d_3 = 3.3m$. With these values, evaluating Equation (1) results in a distance loss $L_3 = 0.2025$. In a third iteration of act 1114, loss $L_3$ is compared to the maximum loss threshold of 0.25. Since 0.2025 is less than 0.25, loss $L_3$ is within the maximum loss threshold. If no auxiliary criteria are specified (i.e. act 1118 is not included), method 1100 proceeds to act 1120, where the trained model is output.

For a case where an auxiliary criteria is specified in the second example, which requires that the loss be within the maximum loss threshold for each image in the first set of images, at 1118 the method returns to 1112. The following distance function is evaluated for a fourth image at 1112, and method 1100 proceeds to sub-act 1114 (and 1116 if appropriate) similar to as discussed regarding the first image. This cycle is repeated for each image in the first set of images. Further, because the loss function for the first and second images was determined as being greater than the maximum loss threshold, sub-acts 1112, 1114, and 1116 (as appropriate) are performed again for the first and second images.

In the second example, the model is trained by iteratively evaluating the distance loss function, on different images. In this way, loss can be minimized for a plurality of images (or a satisfactory amount of images) in the first set of images.

Once trained, the following distance model can be stored on a non-transitory processor-readable storage medium of a vehicle device (such as image capture devices 108, 108A, 108C, or peripheral device 220 or 220D). In act 408 of method 400 or method 1000, the trained following distance model can be executed on the first image data, second image data, and any other additional image data as appropriate for a given application. The determined following distance is then output as the analysis data at 412.

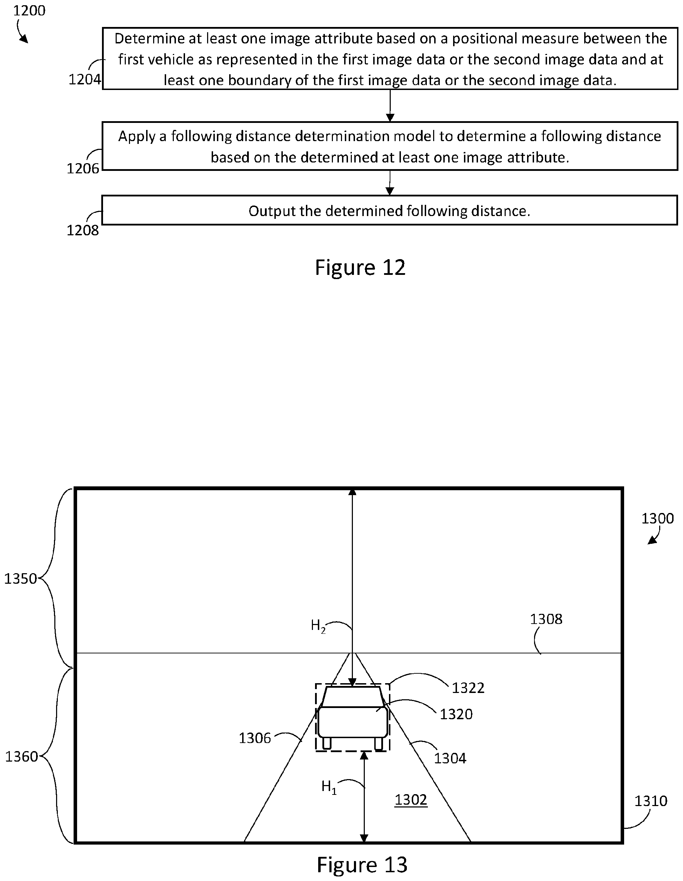

Figure 12 is a flowchart diagram which illustrates an exemplary method (or model) 1200 for determining following distance, which can be executed to generate the analysis data in acts 408 of method 400 and/or 1000. Method 1200 as illustrated includes acts 1204, 1206, and 1208. One skilled in the art will appreciate that additional acts could be added, acts could be removed, or acts could be reordered as appropriate for a given application. Acts of method 1200 can be performed by appropriate components of the systems or devices discussed earlier with reference to Figures 1A, 1B, 2A, 2B, 2C, 2D, or 3. Importantly, a system or device which performs method 1200 to determine following distance is not necessarily the same hardware which trains the applied following distance detection model. In this way, model training and model execution can be performed by discrete systems or devices most suited to the task. For example, a central server (e.g. any of client device 104, cloud server 106, or local server 118) can perform model training, and a device at a vehicle (e.g. image capture devices 108, 108A, 108C, or peripheral device 220 or 220D) can apply the trained model to the first image data, second image data, and any additional image data generated or accessed in the context of methods 400 and/or 1000. However, in some implementations, a single device or system can perform all of training a machine learning model and applying the machine learning model.

Method 1200 is discussed below in the context of an example scenario illustrated in Figure 13. However, method 1200 is applicable to many different scenarios. Figure 13 illustrates an image 1300 having a boundary 1310. Image 1300 shows a vehicle 1320 (the first vehicle in method 1200) driving along a roadway 1302 shown by edges 1304 and 1306, towards a horizon 1308. A vehicle (the second vehicle in method 1200) is driving behind vehicle 1320, and carries the image capture device which the perspective of image 1300 represents (i.e., the camera which captures image 1300). Image 1300 is also segmented into sections of image data having different pixel density. In particular, image 1300 is segmented into a first region 1350 represented by first image data and a second region 1360 represented by second image data. While not expressly illustrated in Figure 13, image 1300 can be further segmented into any amount of additional image data representing respective additional regions(e.g. third image data representing a third region).

Returning to method 1200, at 1204, at least one processor of the system or device performing method 1200 determines at least one image attribute based on a positional measure between the first vehicle as represented in the first image data and/or the second image data and at least one boundary of the of the first image data or the second image data. Such a positional measure can be based on physical features of the vehicle represented in the image (e.g. pixels representing edge features of the vehicle), or by identifying delineations of the vehicle. For example, a feature detection model (such as the YOLO detection model) can be run on the first image data and/or the second image data, to identify the first vehicle. A bounding box (such as bounding box 1322 in Figure 13) can be identified which approximates boundaries of the first vehicle (vehicle 1320). The at least one positional measure can be based on such a bounding box.

In the example of Figure 13, the positional measure includes a distance $H_1$ from a bottom boundary of the image 1300 (e.g. a bottom edge of boundary 1310) to a bottom of the first vehicle 1320 (or a bottom of the bounding box 1322). Distance $H_1$ represents a distance along the image data, and can be expressed in any appropriate units. A particularly convenient unit is number of pixels, such that distance $H_1$ represents a number of pixels from a bottom edge of image 1300 to a bottom of vehicle 1320 (or bottom of bounding box 1322). $H_1$ as shown in Figure 13 extends from a bottom of image 1300, and thus in some cases may extend across different segments of image data (e.g. may span across the first image data to the second image data, in the context of methods 400 and 1000). However, in some implementations, the positional measure may be based on boundaries of segments of image data (e.g., $H_1$ could instead extend from a bottom of first image data 1350 generated in method 400 or 1000, to vehicle 1322).

Optionally, in the example of Figure 13, the positional measure can also include another distance $H_2$ from a top boundary of the image 1300 to a top of the first vehicle 1320 (or a top of the bounding box 1322). Alternatively, $H_2$ could extend from a boundary of a segment of image data (e.g. from a top of the first image data 1350 to vehicle 1320).

At 1206 in method 1200, the at least one processor applies a following distance determination model to determine the following distance based on the at least one image attribute determined at 1204. This model is trained to predict or determine following distance based on the at least one image attribute, as opposed to by analysis of the image itself.

Generally, the further a leading vehicle is from a following vehicle (the greater the physical distance between the first and second vehicle in method 1200), the larger distance $H_1$ will be, and the smaller the distance $H_2$ will be (for the exemplary $H_1$ and $H_2$ as shown in Figure 13). This is because a further away vehicle will typically appear higher up in images captured by a front-facing camera in a vehicle. As such, in the example of Figure 13, the model will generally determine following distance as proportional to distance $H_1$ (and optionally inversely proportional to distance $H_2$). In other implementations where the positional measure is from different parts of the image, the relationships between the positional measure and following distance can be different.

At 1208, the determined following distance is output (as at least a portion of the analysis data in 408 of method 400 and/or method 1000). For example, the following distance can be stored at a non-transitory processor-readable storage medium of the device performing method 400 or method 1000, or could be transmitted to a remote device via a communication interface.

The example of Figure 13 illustrates two possible positional attributes $H_1$ and $H_2$ which could be determined. However, any appropriate number of positional attributes could be determined, based on any appropriate areas or boundaries of image data, for use with a model trained based on such positional attributes.

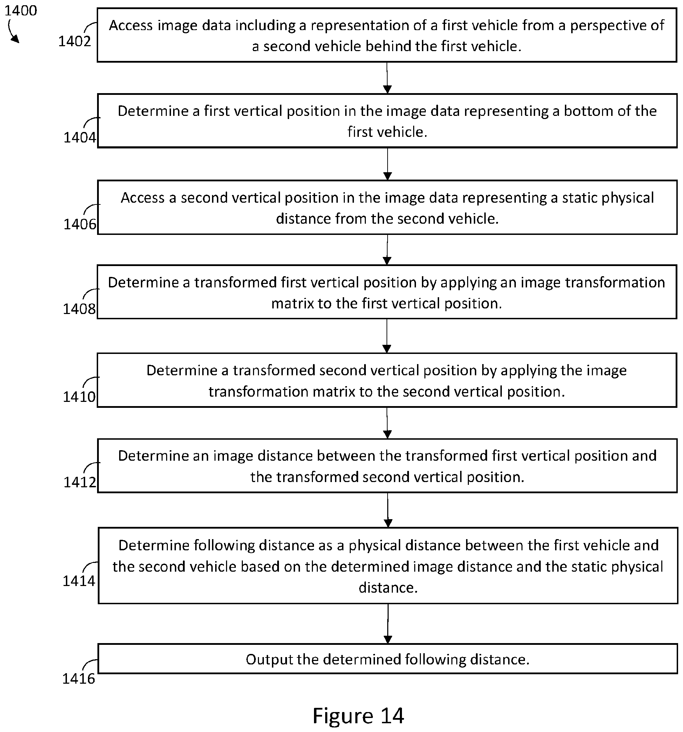

Figure 14 is a flowchart diagram which illustrates another exemplary method (or model) 1400 for determining following distance. Method 1400 can be applied to image data generated or accessed in method 400 and/or method 1000 (including the first image data, the second image data, and/or additional image data representing any additional regions). Method 1400 as illustrated includes acts 1402, 1404, 1406, 1408, 1410, 1412, 1414, and 1416. One skilled in the art will appreciate that additional acts could be added, acts could be removed, or acts could be reordered as appropriate for a given application. Acts of method 1400 can be performed by appropriate components of the systems or devices discussed earlier, similar to as discussed regarding method 1200 and not repeated for brevity.

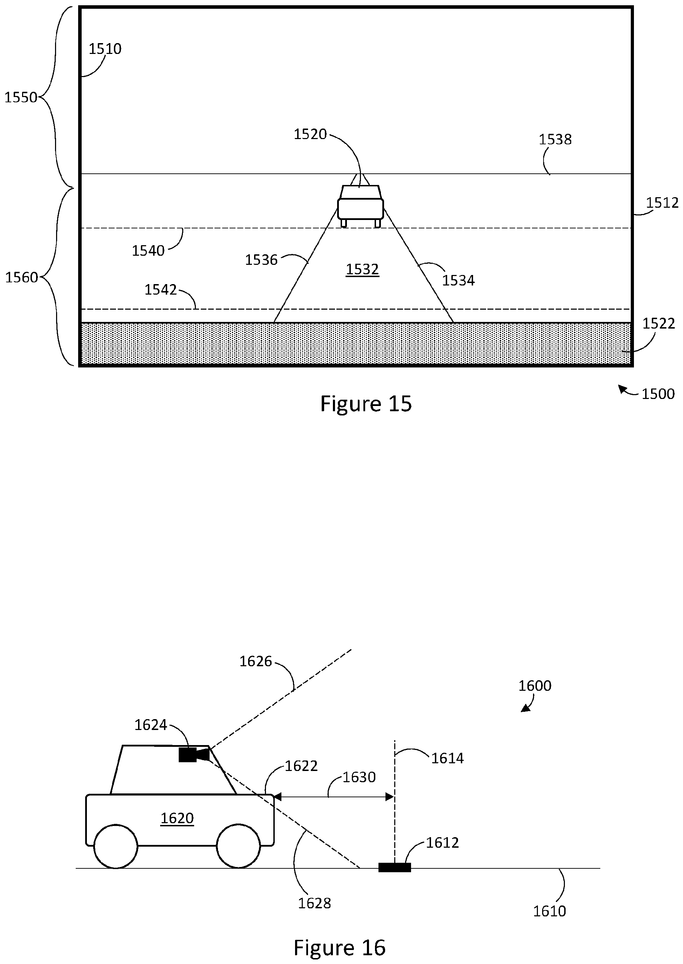

Method 1400 is discussed below in the context of an exemplary scenario illustrated in Figure 15. However, method 1400 is applicable to many different scenarios. Figure 15 illustrates an image 1500 having a left boundary 1510 and a right boundary 1512. Image 1500 shows a vehicle 1520 (the first vehicle in method 1400) driving along a roadway 1532 shown by edges 1534 and 1536, towards a horizon 1538. A vehicle (the second vehicle in method 1400) is driving behind vehicle 1520, and carries the image capture device or plurality of image capture devices which the perspective of image 1500 represents (i.e., the camera which captures image 1500). A hood 1522 of the second vehicle is visible at the bottom of image 1500. Image 1500 is shown as being segmented into sections of image data having different pixel density. In particular, image 1500 includes first region 1550 represented by first image data, and second region 1560 represented by second image data. Further, in other scenarios image 1500 can be segmented into any other appropriate amount of additional image representing additional regions.

Returning to method 1400, at 1402, image data is accessed by a system or device performing method 1400. The "image data" in this context refers to image data representing any appropriate number of regions. The accessed image data includes a representation of a first vehicle from a perspective of a second vehicle behind the first vehicle. Image 1500 shown in Figure 15 is an exemplary image which can be accessed, where the accessed image data includes first image data 1550 and second image data 1560. In the example, vehicle 1520 is the first vehicle, hood 1522 is part of the second vehicle, roadway 1532 includes a common lane of travel as shown by boundaries 1534 and 1536. While roadway 1532 in Figure 15 is shown as a single-lane road to reduce clutter, the present disclosure is fully applicable to multi-lane roadways, where the first vehicle and the second vehicle travel in one common lane of multiple possible lanes. Accessing the image data can comprise capturing the image data or receiving/retrieving image data as captured, as discussed with reference to Figure 10, or accessing generated image data as discussed with reference to Figure 4.

At 1404, at least one processor determines a first vertical position in the image data (either the first image data or the second image data in the example of Figure 15) representing a bottom of the first vehicle. In this regard, Figure 15 shows first vertical position 1540 representing a bottom of first vehicle 1520 as it appears in image 1500. First vertical position 1540 is shown as a line which extends horizontally across image 1500 to illustrate that the first vertical position 1540 may be only a height coordinate in the image, regardless of horizontal position. In some implementations, the first vertical position 1540 may also include a horizontal coordinate, for example centered at the first vehicle 1520 or centered in roadway 1532 (or the common lane of travel). Further, the bottom of the first vehicle 1520 in Figure 15 is shown as the bottom of tires of the vehicle 1520, but other reference points could be used, such as a bottom of a chassis of vehicle 1520.

In order to determine the first vertical position, a variety of techniques could be used. In one example, an object detection model (such as a YOLO model) can be run on image 1500, to output a bounding box which surrounds vehicle 1520 (similar to bounding box 2422 shown in Figure 24A, and not shown in Figure 15 to reduce clutter). A bottom coordinate of such a bounding box can be used as the first vertical position. Alternatively, a feature detection model can be utilized which identifies specific features of vehicle 1520, and identifies a particular feature which is identified as delineating the "bottom" of the first vehicle (e.g. a rear bumper of the first vehicle). A height coordinate of the vehicle can be from any appropriate reference point, such as the bottom of image 1500, the top of image 1500, or the boundary between first image data and the second image data.

At 1406, a second vertical position 1542 in the image is accessed (e.g. by the at least one processor). The second vertical position 1542 represents a static physical distance from the second vehicle. In this regard, the second vertical position 1542 can be determined during a calibration of the image capture device installed in the second vehicle, where a particular image distance (e.g. number of pixels) from a bottom boundary of images captured by the image capture device is correlated to a particular physical distance from the second vehicle (as an example). The second vertical can be from any appropriate reference point, such as the bottom of image 1500, the top of image 1500, or the boundary between first image data and the second image data. In the example of Figure 15, the second vertical position 1542 is shown as being slightly above hood 1522 of the second vehicle (slightly ahead of the front of the second vehicle in physical space). However, other specific positions are possible as the second vertical position 1542, such as a position on hood 1522, or a position at a very front of hood 1522. The second vertical position 1542 can be stored in at least one non-transitory processor-readable storage medium of the system performing method 1400, and accessed (or retrieved) as needed. An exemplary (non-limiting) procedure for calibrating the image capture device and determining the second vertical position 1542 is discussed below with reference to Figure 16.

Figure 16 is a side view of an exemplary scenario 1600, in which a vehicle 1620 is positioned on a surface 1610. In scenario 1600, vehicle 1620 is stationary. A marker 1612 is also positioned on surface 1610, and a projection 1614 is shown extending upwards from marker 1612 (perpendicular to surface 1610). An image capture device 1624 is positioned at vehicle 1620, and captures image data within a field of view shown by field of view lines 1626 and 1628. A hood 1622 of vehicle 1620 is partially captured within field of view lines 1626 and 1628. A physical distance 1630 between a front of vehicle 1620 and marker 1612 (or projection 1614 from marker 1612) is shown, and could be determined for example by manual measurement. This physical distance 1630 can then be correlated to an image distance in image data captured by image capture device 1624, the image distance corresponding to where marker 1612 appears in the captured image data. That is, a static physical distance (physical distance 1630) is determined which is represented by the second vertical position accessed in act 1406 of method 1400.

In some implementations, the static physical distance can be 0, such as by placing marker 1612 immediately adjacent vehicle 1620. This can simplify distance calculations, by may not be possible in all configurations, particularly if the marker 1612 cannot be seen in the field of view of image capture device 1624.

Figure 16 illustrates one exemplary procedure for correlating the second vertical position and a static physical distance. However, other implementations are possible, such as using an object (e.g. a sign) instead of a surface-based marker. Further, the procedure described in Figure 16 does not need to be performed in the context of method 1400 in Figure 14, but rather can be performed prior to said method, as part of an initialization or calibration of the image capture device in the second vehicle.

Due to perspective, in ordinary image data from an image capture device in a vehicle, the relationship between following distance in the real world (physical distance between the first and second vehicles in image data 1500) and image distance in the image data (e.g. quantity of pixels between the first vehicle and the second vehicle as representing in image 1500) is not fixed. That is, the higher up a pixel is vertically in the image data (the further forward in physical space the pixel represents), the greater the distance represented by the pixel. Consequently, it is challenging to determine following distance between vehicles based on image data. To address this, method 1400 in Figure 14 transforms the image data (or at least key points of the image data) to arrive at a fixed relationship between image distance and physical distance (e.g. physical distance between the first and second vehicles). This is discussed with reference to acts 1408 and 1410 below. This fixed relationship can be expressed, for example, as a ratio between a number of pixels in the image and physical distance represented by said number of pixels. For example, a ratio of image distance to physical distance could be 1 meter per 10 pixels, 1 meter per 50 pixels, 1 meter per 100 pixels, or any other appropriate ratio. Further, in some cases two different fixed relationships can be used, such as a first ratio between a first number of pixels in a horizontal direction of the image and physical distance represented by said number of pixels, and a second ratio between a second number of pixels in a vertical direction of the image and physical distance represented by said number of pixels. In one illustrative example, one meter of physical distance is represented by 75.998 pixels in the horizontal direction (x axis), whereas one meter of physical distance is represented by 109.202 pixels in the vertical direction (y axis). These numbers are merely exemplary, and any ratio could be used as appropriate for a given application.

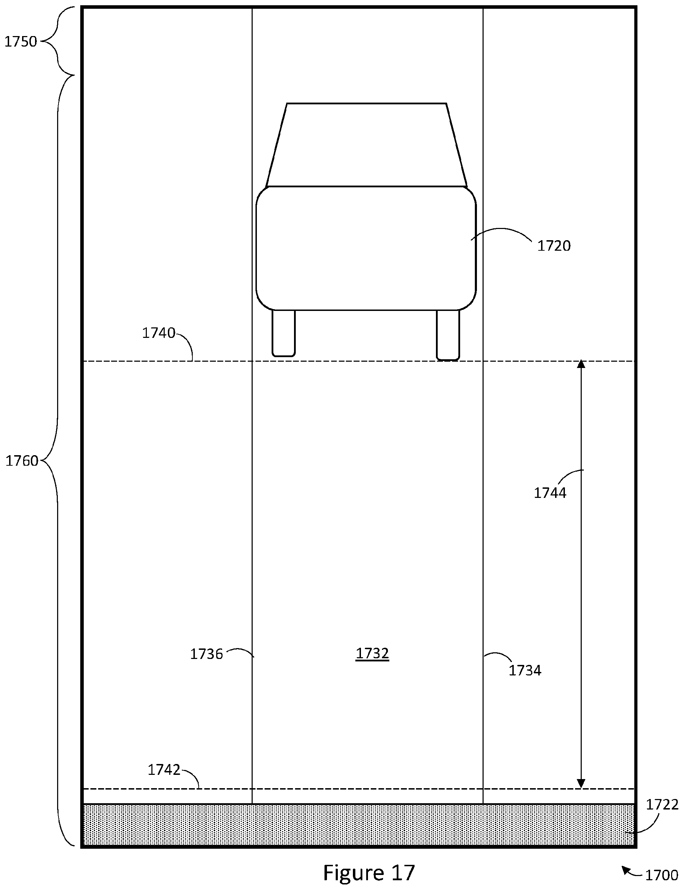

In act 1408, the at least one processor determines a transformed first vertical position by applying an image transformation matrix to the first vertical position determined in act 1404. In act 1410, the at least one processor determines a transformed second vertical position by applying the image transformation matrix to the second vertical position. The image transformation matrix is a matrix which, when applied to image data for a particular image capture device setup, transforms the image data to a bird's eye view of the image. That is, the image transformation matrix transforms the image data to a top-down view, where there is a fixed relationship between physical following distance and image distance (e.g., image distance can be converted to physical distance by applying a fixed ratio which relates image distance to physical distance). That is, in the transformed image, a pixel represents a set physical distance, regardless of the position of the pixel in the image. This is discussed in detail below with reference to Figure 17. Examples of how the image transformation matrix can be obtained are discussed for example in US Provisional Patent Application No. 63/537,875.

Figure 17 illustrates transformed image data 1700, based on the image data 1500 discussed with reference to Figure 15. In particular, transformed image data 1700 represents a portion of image data 1500 extending from a bottom of image data 1500 to above vehicle 1520 as represented in image data 1500. Transformed image data 1700 can be obtained by applying the image transformation matrix to image data 1500 (or portions of the first image data and the second image data thereof). Transformed image data 1700 is shown in Figure 17 as including a first region 1750 which corresponds to a portion of the first region 1550 in Figure 15, and a second region 1760 which corresponds to a portion of the second region 1560 in Figure 15. Transformed image data 1700 is shown in Figure 17 as including representation 1732 of roadway 1532, as shown by representations 1734 and 1736 of boundaries 1534 and 1536, respectively. Transformed image data 1700 further includes representation 1720 of vehicle 1520, and representation 1722 of hood 1522 of the second vehicle. A transformed first vertical position 1740 is also shown in Figure 17, which represents a transformation of the first vertical position as determined in act 1408. A transformed second vertical position 1742 is also shown in Figure 17, which represents a transformation of the second vertical position as determined in act 1410.

The transformed image data (such as shown in Figure 17) does not need to have the same resolution or aspect ratio as image data prior to transformation. This can be seen by comparing Figures 15 and 17, where transformed image data 1700 is significantly taller than wide, compared to image 1500. Further, in some respects, the transformed image data may not be a completely faithful reproduction of how the scene would actually appear if viewed from the top view. For example, while representation 1720 may represent a shape and scale of vehicle 1520 as transformed, image data 1500 may not include data which shows what an actual top of vehicle 1520 looks like. In this regard, representation 1720 may be image data representing a rear of vehicle 1520, transformed to a shape and scale of a top view of vehicle 1520.

In some implementations, acts 1408 and 1410 of method 1400 can entail transforming a significant portion of the image data, such as shown in Figure 17, and identifying the transformed first vertical position 1740 and the transformed second vertical position 1742 in the transformed image data. However, this is not strictly necessary, and instead the image transformation matrix can be applied directly to the first vertical position and the second vertical position to determine the transformed first vertical position and the transformed second vertical position. This approach can significantly reduce computational burden of method 1400.

Returning to method 1400 in Figure 14, at 1412, the at least one processor determines an image distance between the transformed first vertical position and the transformed second vertical position. This is shown by way of example in Figure 17 as image distance 1744. The image distance can be, for example, a quantity of pixels between the transformed first vertical position and the transformed second vertical position.

At 1414, the at least one processor determines following distance as a physical distance between the first vehicle and the second vehicle based on the image distance determined at 1412 and the static physical distance discussed with reference to Figures 15 and 16. In particular, a ratio of physical distance to image distance is applied to the image distance determined at 1412 (image distance 1744 in the example of Figure 17) to determine a physical distance represented by the determined image distance. How such a ratio of physical distance to image distance can be determined is discussed in detail for example in US Provisional Patent Application No. 63/537,875. The static physical distance discussed with reference to act 1406 is added to the determined physical distance to arrive at following distance between the first vehicle and the second vehicle.

At 1416, the determined following distance is output (as at least a portion of the analysis data in 408 of method 400 and/or method 1000). For example, the following distance can be stored at a non-transitory processor-readable storage medium of the device performing method 400 or method 1000, or could be transmitted to a remote device via a communication interface.

While the present invention has been described with respect to the non-limiting embodiments, it is to be understood that the invention is not limited to the disclosed embodiments. Persons skilled in the art understand that the disclosed invention is intended to cover various modifications and equivalent arrangements included within the scope of the appended claims. Thus, the present invention should not be limited by any of the described embodiments.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

**Claims**

1. A method comprising:

   accessing, by a vehicle device positioned at a vehicle, first image data, the first image data at least partially representing a first region from a perspective of the vehicle and having a first pixel density;
   accessing, by the vehicle device, second image data, the second image data at least partially representing a second region from the perspective of the vehicle and having a second pixel density less than the first pixel density;
   generating, by at least one processor, analysis data by executing at least one image analysis model on the first image data and the second image data;
   generating, by the at least one processor, output image data, the output image data representing the first region and the second region and having the second pixel density;
   outputting the analysis data; and
   outputting the output image data.

2. The method of claim 1, wherein outputting the output image data comprises outputting the output image data to at least one non-transitory processor-readable storage medium at the vehicle device.

3. The method of claim 1 or claim 2, wherein outputting the output image data comprises transmitting, by at least one communication interface of the vehicle device, the output image data to a device remote from the vehicle.

4. The method of any one of claims 1 to 3, wherein outputting the analysis data comprises transmitting, by at least one communication interface of the vehicle device, the analysis data to a device remote from the vehicle.

5. The method of any one of claims 1 to 4, wherein:

   the method further comprises accessing, by the vehicle device, third image data, the third image data representing a third region from the perspective of the vehicle and having a third pixel density less than the first pixel density and greater than the second pixel density;
   generating the analysis data comprises generating the analysis data by executing the at least one image analysis model on the first image data, the second image data, and the third image data; and
   generating the output image data comprises generating the output image data representing the first region, the second region, and the third region, at the second pixel density.

6. The method of any one of claims 1 to 5, wherein:
   the first region represents real-world content further from the vehicle than real-world content represented by the second region.

7.  The method of any one of claims 1 to 6, wherein generating the analysis data by executing at least one image analysis model on the first image data and the second image data comprises:
    executing a trained object detection model on the first image data and the second image data.

8.  The method of any one of claims 1 to 7, wherein generating the analysis data by executing at least one image analysis model on the first image data and the second image data comprises:
    executing a following distance detection model on the first image data and the second image data.

9.  The method of any one of claims 1 to 8, wherein:

    accessing the first image data comprises capturing the first image data by first image capture hardware positioned at the vehicle; and
    accessing the second image data comprises capturing the second image data by second image capture hardware positioned at the vehicle.

10. The method of any one of claims 1 to 9, wherein:

    accessing the first image data comprises receiving the first image data from first image capture hardware positioned at the vehicle and communicatively coupled to the vehicle device; and
    accessing the second image data comprises receiving the second image data from second image capture hardware positioned at the vehicle and communicatively coupled to the vehicle device.

11. The method of any one of claims 1 to 9, further comprising:

    accessing, by the vehicle device, input image data representing the perspective from the vehicle, the input image data including the first region and the second region represented with an input pixel density,
    wherein:

        accessing the first image data comprises generating the first image data by at least one processor positioned at the vehicle based on the first region as represented in the input image data; and
        accessing the second image data comprises generating the second image data by the at least one processor positioned at the vehicle based on the second region as represented in the input image data.

12. The method of claim 11, wherein:

    the first image data represents an entirety of the first region; and
    the second image data represents an entirety of the second region.

13. The method of claim 11, wherein:

    the first image data represents a first cropped portion of the first region; and
    the second image data represents a second cropped portion of the second region.

14. A system comprising:
    a vehicle device which includes:

        at least one processor;
        at least one communication interface; and
        at least one non-transitory processor-readable storage medium storing processor-executable instructions which when executed by the at least one processor cause the vehicle device to perform the method of any one of claims 1 to 13.

15. A system of claim 14, further comprising image capture hardware.

FIGURE 1A

FIGURE 1B

FIGURE 2A

FIGURE 2B

FIGURE 2C

FIGURE 2D

Figure 3

| 402 | Access input image data representing a perspective from a vehicle, the input image data including a first region and a second region each having an input pixel density. |
| --- | --- |
| 404 | Generate first image data representing the first region and having a first pixel density. |
| 406 | Generate second image data representing the second region and having a second pixel density less than the first pixel density. |
| 408 | Generate analysis data by executing at least one image analysis model on the first image data and the second image data. |
| 410 | Generate output image data representing the first region and the second region and having the second pixel density. |
| 412 | Output the output analysis data. |
| 414 | Output the output image data. |

Figure 4                    400

Figure 5A

Figure 5B

EP 4 571 678 A1

Figure 6A

EP 4 571 678 A1

Figure 6B

652

672

662

600B

Figure 7A

EP 4 571 678 A1

Figure 7B

Figure 8A

Figure 8B

Figure 9

Access first image data representing a first region and having a first pixel density.

Access second image data representing a second region and having a second pixel density less than the first pixel density.

Generate analysis data by executing at least one image analysis model on the first image data and the second image data.

Generate output image data representing the first region and the second region and having the second pixel density.

Output the output analysis data.

Output the output image data.

Figure 10                    1000

Access image data including at least a first set of images, each image in the first set of images including a representation of a respective first vehicle from a perspective of a second respective vehicle behind the first respective vehicle.

Minimize a following distance loss function over the first set of images.

Evaluate the following distance loss function for at least one image of the first set of images.

1112

Adjust the model.        NO        Is loss within a maximum loss threshold?

1116

1114

YES

Auxiliary Criteria Satisfied?        NO

1118

YES

Output the trained model.        1100

1120

Figure 11

1200

1204 Determine at least one image attribute based on a positional measure between the first vehicle as represented in the first image data or the second image data and at least one boundary of the first image data or the second image data.

1206 Apply a following distance determination model to determine a following distance based on the determined at least one image attribute.

1208 Output the determined following distance.

Figure 12

1350

1360

$H_2$

1308

1322

1320

1306

1304

$H_1$

1302

1300

1310

Figure 13

1400

Access image data including a representation of a first vehicle from a perspective of a second vehicle behind the first vehicle.

1402

Determine a first vertical position in the image data representing a bottom of the first vehicle.

1404

Access a second vertical position in the image data representing a static physical distance from the second vehicle.

1406

Determine a transformed first vertical position by applying an image transformation matrix to the first vertical position.

1408

Determine a transformed second vertical position by applying the image transformation matrix to the second vertical position.

1410

Determine an image distance between the transformed first vertical position and the transformed second vertical position.

1412

Determine following distance as a physical distance between the first vehicle and the second vehicle based on the determined image distance and the static physical distance.

1414

Output the determined following distance.

1416

Figure 14

Figure 15

Figure 16

Figure 17

Europäisches
Patentamt

European
Patent Office

Office européen
des brevets

# EUROPEAN SEARCH REPORT

**Application Number**

EP 24 21 5634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/189574 A1 (BRUECKNER PETER [US] ET AL) 5 July 2018 (2018-07-05)<br>* abstract *<br>* paragraphs: [0033], [0039], [0040]-[0041], [0044]-[0045], [0080]-[0082] *<br>* figures 1, 3, 7 * | 1-15 | INV.<br>G06V20/56<br>G06V20/58 |
| X | US 2020/175326 A1 (SHEN ANTING [US] ET AL) 4 June 2020 (2020-06-04)<br>* abstract *<br>* paragraphs: [0031], [0034], [0036]-[0039], [0041] *<br>* figure 4 * | 1-4,9, 10,14,15 | |

**TECHNICAL FIELDS SEARCHED (IPC)**

G06V

The present search report has been drawn up for all claims

| Place of search | Date of completion of the search | Examiner |
|---|---|---|
| The Hague | 20 March 2025 | Sagrebin-Mitzel, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 5634

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| US 2018189574 A1 | 05-07-2018 | NONE | |
| US 2020175326 A1 | 04-06-2020 | US 2020175326 A1 | 04-06-2020 |
| | | US 2023245415 A1 | 03-08-2023 |
| | | US 2024185552 A1 | 06-06-2024 |

EPO FORM P0459

For more details about this annex : see Official Journal of the European Patent Office, No. 12/82

**REFERENCES CITED IN THE DESCRIPTION**

**Patent documents cited in the description**

- US 63608999
- US 63456179
- US 63526233
- US 63537875
- US 63606307